(19) **Europäisches Patentamt / European Patent Office / Office européen des brevets**

(11) **EP 4 154 486 B1**

(12) # EUROPEAN PATENT SPECIFICATION

(45) Date of publication and mention
of the grant of the patent:
**07.01.2026 Bulletin 2026/02**

(21) Application number: **20808082.0**

(22) Date of filing: **16.11.2020**

(51) International Patent Classification (IPC):
**H04L 25/03** $^{(2006.01)}$ **H04L 25/02** $^{(2006.01)}$

(52) Cooperative Patent Classification (CPC):
**H04L 25/03821; H04L 25/03159; H04L 25/0328;**
H04L 25/023; H04L 2025/03605; H04L 2025/03611

(86) International application number:
**PCT/EP2020/082229**

(87) International publication number:
**WO 2022/100863 (19.05.2022 Gazette 2022/20)**

(54) **RECEIVER DEVICES AND METHODS FOR SINGLE-CARRIER MODULATION SCHEMES**

EMPFÄNGERVORRICHTUNGEN UND VERFAHREN FÜR
EINZELTRÄGERMODULATIONSSCHEMEN

DISPOSITIFS RÉCEPTEURS ET PROCÉDÉS POUR SCHÉMAS DE MODULATION À PORTEUSE
UNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2023 Bulletin 2023/13**

(73) Proprietor: **Huawei Technologies Co., Ltd.
Longgang District,
Shenzhen,
Guangdong 518129 (CN)**

(72) Inventors:
• **DEBBAH, Merouane**
**80992 Munich (DE)**
• **ZAKARIA, Rostom**
**80992 Munich (DE)**
• **TOURKI, Kamel**
**80992 Munich (DE)**

(74) Representative: **Roth, Sebastian
Mitscherlich PartmbB
Patent- und Rechtsanwälte
Karlstraße 7
80333 München (DE)**

(56) References cited:
• TOURKI KAMEL ET AL: "LVDM Time-Frequency Equalizers for Doubly Selective Channels", 2020 IEEE 31ST ANNUAL INTERNATIONAL SYMPOSIUM ON PERSONAL, INDOOR AND MOBILE RADIO COMMUNICATIONS, IEEE, 31 August 2020 (2020-08-31), pages 1 - 6, XP033837482, DOI: 10.1109/PIMRC48278.2020.9217145
• TOURKI KAMEL ET AL: "Single Carrier Lagrange Vandermonde Division Multiplexing", 2020 IEEE 31ST ANNUAL INTERNATIONAL SYMPOSIUM ON PERSONAL, INDOOR AND MOBILE RADIO COMMUNICATIONS, IEEE, 31 August 2020 (2020-08-31), pages 1 - 5, XP033837647, DOI: 10.1109/PIMRC48278.2020.9217317
• TOURKI KAMEL ET AL: "Lagrange Vandermonde Division Multiplexing", ICC 2020 - 2020 IEEE INTERNATIONAL CONFERENCE ON COMMUNICATIONS (ICC), IEEE, 7 June 2020 (2020-06-07), pages 1 - 6, XP033798420, DOI: 10.1109/ICC40277.2020.9149410

- **TOURKI KAMEL ET AL: "LVDM Time-Frequency Equalizers for Doubly Selective Channels", 2020 IEEE 31ST ANNUAL INTERNATIONAL SYMPOSIUM ON PERSONAL, INDOOR AND MOBILE RADIO COMMUNICATIONS, IEEE, 31 August 2020 (2020-08-31), pages 1 - 6, XP033837482, DOI: 10.1109/ PIMRC48278.2020.9217145**
- **TOURKI KAMEL ET AL: "Single Carrier Lagrange Vandermonde Division Multiplexing", 2020 IEEE 31ST ANNUAL INTERNATIONAL SYMPOSIUM ON PERSONAL, INDOOR AND MOBILE RADIO COMMUNICATIONS, IEEE, 31 August 2020 (2020-08-31), pages 1 - 5, XP033837647, DOI: 10.1109/PIMRC48278.2020.9217317**
- **TOURKI KAMEL ET AL: "Lagrange Vandermonde Division Multiplexing", ICC 2020 - 2020 IEEE INTERNATIONAL CONFERENCE ON COMMUNICATIONS (ICC), IEEE, 7 June 2020 (2020-06-07), pages 1 - 6, XP033798420, DOI: 10.1109/ICC40277.2020.9149410**

**Description**

TECHNICAL FIELD

The present disclosure relates generally to the field of single-carrier modulation systems, particularly to receiver devices of single-carrier modulation systems. To this end, receiver devices, a system, and methods are disclosed, e.g., for time-frequency-domain single-carrier Lagrange-Vandermonde Division Multiplexing (LVDM) equalization in doubly selective (time- and frequency-selective) channels.

BACKGROUND

Conventionally, in frequency-selective channels, single-carrier frequency-domain equalization (SC-FDE) has been used. For instance, a conventional single-carrier frequency-domain multiple access (SC-FDMA) scheme has been adapted for fourth generation (4G) uplink transmissions. However, an issue of conventional devices based on the SC-FDMA scheme is that a perfect recovery (PR) cannot be achieved in deep fading scenarios.

Furthermore, conventional time-domain channel estimation and detection methods have also been suggested for single-carrier signals in fast and/or frequency-selective Rayleigh fading channels. However, an issue of such conventional methods is that, as a consequence of the time-varying channel, the orthogonality between subcarriers is destroyed, resulting in inter-carrier interference (ICI), which increases an irreducible error floor in proportion to a normalized Doppler frequency.

Furthermore, conventional methods for cancelling inter-symbol interference (ISI) have also been suggested. Such cancellation methods attempt to remove ISI from the received signal, in order to isolate the desired data symbol.

However, an issue of the conventional ISI cancellation methods is, for example, their substantial performance error.

Another issue of conventional devices and methods is generally their complexity. For example, in order to prevent error propagation, reliable decisions should be fed to such conventional devices and methods. TOURKI KAMEL ET AL, "LVDM Time-Frequency Equalizers for Doubly Selective Channels", 2020 IEEE 31ST ANNUAL INTERNATIONAL SYMPOSIUM ON PERSONAL, INDOOR AND MOBILE RADIO COMMUNICATIONS, IEEE, (20200831), pages 1 - 6, discusses LVDM receivers that can deal with double selective channels. TOURKI KAMEL ET AL, "Single Carrier Lagrange Vandermonde Division Multiplexing", 2020 IEEE 31ST ANNUAL INTERNATIONAL SYMPOSIUM ON PERSONAL, INDOOR AND MOBILE RADIO COMMUNICATIONS, IEEE, (20200831), pages 1 - 5, propose the single carrier Lagrange Vandermonde division multiplexing (SC-LVDM) that generalizes the single carrier frequency domain equalization (SC-FDE) and harvests the channel diversity. TOURKI KAMEL ET AL, "Lagrange Vandermonde Division Multiplexing", ICC 2020 - 2020 IEEE INTERNATIONAL CONFERENCE ON COMMUNICATIONS (ICC), IEEE, (20200607), pages 1 - 6, propose a LVDM waveform that generalizes the zero padding orthogonal frequency division multiplexing (ZP-OFDM) while guaranteeing the perfect recovery of the transmitted signal.

SUMMARY

In view of the above-mentioned problems and disadvantages, embodiments of the present disclosure aim to improve receiver devices and receiving methods for single-carrier modulation schemes. An objective is to provide an advanced receiver for a single-carrier LVDM scheme that is able to deal with doubly selective channels (i.e., channels varying in time and frequency).

One or more of the objectives is achieved by the embodiments of the disclosure as described in the enclosed independent claims. Advantageous implementations of the embodiments of the disclosure are further defined in the dependent claims.

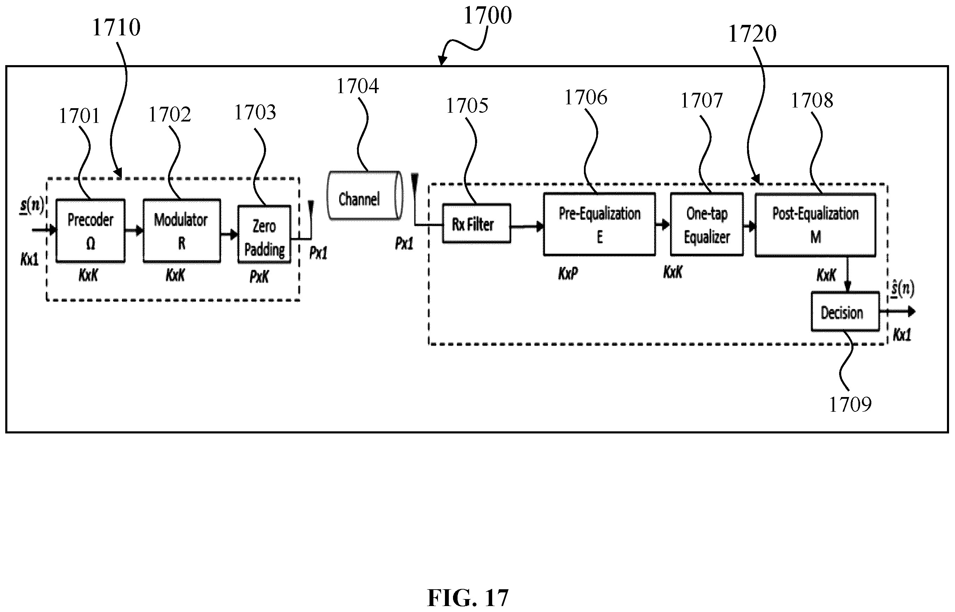

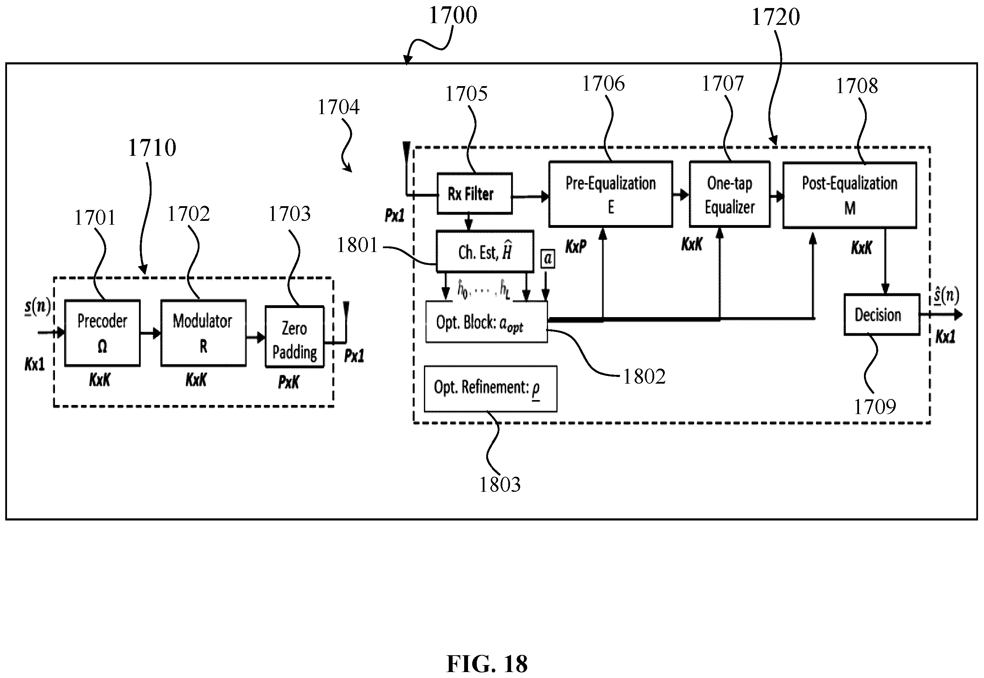

An approach to improve the conventional devices and methods, on which embodiments of the disclosure are based, is disclosed in an exemplary system 1700 comprising a transmitter device 1710 and a receiver device 1720, which are described in the following with reference to FIG. 17 and FIG. 18. The exemplary system 1700 lays the basis for the embodiments of the present disclosure.

FIG. 17 depicts an exemplary scheme comprising a single-carrier transmitter device 1710, and a receiver device 1720 using a Vandermonde matrix for demodulation. The transmitter device 1710 and the receiver device 1720 communicate over a communication channel 1704.

Moreover, a new waveform generalizing the SC-FDE, referred to as single-carrier LVDM, has been proposed in this approach, wherein the PR condition has been satisfied. The SC-LVDM relies on a one-tap equalization leading to a low-complexity implementation of the transmitter device 1710 and receiver device 1720.

In the following, a discussion for the system 1700 is presented based on the SC-LVDM in frequency-selective channels.

The transmitter device 1710 includes a precoder 1701, a modulator 1702, and a Zero Padding (ZP) block 1703.

The transmitter device 1710 may also be compatible with a transmitter device of a multicarrier LVDM scheme. The transmitter 1710 of the SC-LVDM scheme uses the precoder 1701 and the modulator 1702 given by R and $\Omega$, respectively, as follows:

$$\mathbf{R} = \begin{bmatrix} 1 & \rho_0^{-1} & L & \rho_0^{1-K} \\ 1 & \rho_1^{-1} & L & \rho_1^{1-K} \\ M & M & & M \\ 1 & \rho_{K-1}^{-1} & L & \rho_{K-1}^{1-K} \end{bmatrix} \qquad \text{Eq. (1)}$$

and

$$\mathbf{\Omega} = \frac{1}{K} \begin{bmatrix} 1 & \rho_0 & L & \rho_0^{K-1} \\ 1 & \rho_1 & L & \rho_1^{K-1} \\ M & M & & M \\ 1 & \rho_{K-1} & L & \rho_{K-1}^{K-1} \end{bmatrix}^T \qquad \text{Eq. (2)}$$

where it can be verified that $\mathbf{R}\Omega = \mathbf{I} \forall \rho_k$. Furthermore, during the transmission process, the transmitter device 1710 may add a number of $L$ zeros to the $K$ symbols, and may further transmit $P$ symbols, where $P = K + L$, using a single carrier.

Furthermore, the receiver device 1720 uses a number of $K$ distinct nonzero complex points $\{\rho_k\}_{k=1}^K$, referred to as signature roots, which are chosen uniformly spread over a circle of radius $a$, such that $\rho_k = ae^{\frac{j2\pi k}{K}}$.

The receiver device 1720 includes a receiver filter 1705, pre-equalization 1706, a one-tap equalizer unit 1707, post-equalization 1708, and a decision block 1709.

The pre-equalization 1706 (i.e., the demodulator) performs a demodulation based on constructing a matrix E, which is a Vandermonde matrix having a size of $K \times P$, as follows:

$$E = \begin{bmatrix} 1 & \rho_0^{-1} & L & \rho_0^{1-P} \\ 1 & \rho_1^{-1} & L & \rho_1^{1-P} \\ M & M & & M \\ 1 & \rho_{K-1}^{-1} & L & \rho_{K-1}^{1-P} \end{bmatrix}, \qquad v_{k,p} = \left( \rho_{k-1}^{1-p} \right) \qquad \text{Eq. (3)}$$

The Vandermonde matrix is applied to a received signal to obtain a demodulated signal given by:

$$\mathbf{y} = \underbrace{\begin{bmatrix} C(\rho_0) & & \\ & \ddots & \\ & & C(\rho_{K-1}) \end{bmatrix}}_{D} \mathbf{E}(:,1:K)\mathbf{s} + \mathbf{E}\mathbf{\eta} \qquad \text{Eq. (4)}$$

where C is a propagation channel of order L, given by $C(z) = \sum_{l=0}^{L} h_l z^{-l}$. Furthermore, the convolution of the transmitter filter, the parameter C, and the receiver filter may be given by a channel matrix H (frequency-selective channels). Moreover, in the above Eq. (4), E(:,1:K) is the *K* first columns of the Vandermonde matrix E. Moreover, the signature roots are chosen such that the $C(\rho_k) \neq 0$, $\forall k$ can be obtained.

The one-tap equalizer 1707 of the receiver device 1720 uses a KxK diagonal matrix given by $D^{-1}$, followed by the post-equalization unit (given by M which is a *KxK* matrix). Therefore, the demodulated signal may be obtained according to Eq. (5) as follows:

$$\tilde{\mathbf{y}} = \mathbf{s} + \overbrace{\mathbf{E}(:,1:K)^{-1}}^{\mathbf{M}} \overbrace{\begin{bmatrix} C(\rho_0)^{-1} & & \\ & \ddots & \\ & & C(\rho_{K-1})^{-1} \end{bmatrix}}^{\mathbf{D}^{-1}} \mathbf{E}\boldsymbol{\eta} \qquad \text{Eq. (5)}$$

where the following matrix M

$$\mathbf{M} = \frac{1}{K} \begin{bmatrix} 1 & 1 & \cdots & 1 \\ \rho_0 & \rho_1 & \cdots & \rho_{K-1} \\ \vdots & \vdots & & \vdots \\ \rho_0^{K-1} & \rho_1^{K-1} & \cdots & \rho_{K-1}^{K-1} \end{bmatrix} \qquad \text{Eq. (6)}$$

is a Vandermonde matrix and no inversion is needed. Here, for example, a perfect recovery of s is satisfied.

Next, the decision block 1709 of the receiver device 1720 will be discussed. Reference is made to FIG. 18, which is a schematic view of the system 1700 comprising the transmitter device 1710 and the receiver device 1720 using a radius of a circle for building its modules. For example, the radius a of the circle may be modified, e.g., optimized "$a_{opt}$", at the receiver device 1720 and the modified, optimized radius of the circle may further be used to build the modules of the receiver device, as shown in FIG. 18.

The receiver device 1720 may further comprise a channel estimation block 1801 and an optimization block 1802 that may obtain the channel state information (CSI), e.g., from the channel estimation block 1801, and may further compute the $a_{opt}$.

The receiver device 1720 of FIG. 18 uses the modified, optimized radius $a_{opt}$ to compute the pre-equalizer (in 1706), the one-tap equalizer (in 1707), and the post-equalizer (in 1708) modules.

In some embodiments, optionally, a refinement block 1803 may be provided which may, for example, use a refinement algorithm to refine the plurality of signature roots.

However, in time-selective channels, the orthogonality between subcarriers may be destroyed and the matrix D (e.g., in the one-tap equalizer 1707 of the receiver device 1720) is not diagonal anymore. Consequently, ISI appears and the one-tap equalization techniques may not be adequate for detecting the symbols.

In comparison with the receiver device 1720, the receiver devices and methods of the present disclosure enable to better deal with doubly (time and frequency) selective channels, while maintaining the low complexity of the receiver device 1720.

A first aspect of the present disclosure provides a receiver device for single-carrier modulation. The receiver device is configured to determine channel state information (CSI) of a communication channel between the receiver device and a transmitter device, determine a plurality of signature roots based on the CSI, wherein each signature root of the plurality of signature roots is a nonzero complex point, and wherein the plurality of signature roots are uniformly distributed on a circumference of a circle in a complex plane, construct a first Vandermonde matrix based on the plurality of signature roots, perform a demodulation of a single-carrier modulated signal received from the transmitter device, based on the first Vandermonde matrix, to obtain a demodulated signal, and obtain symbols based on performing a first iterative procedure on the demodulated signal, the first iterative procedure comprising a set of parallel interference cancellation (PIC) iterations.

The receiver device may determine the CSI. For example, the receiver device may comprise a channel estimation unit that may run a channel estimation algorithm for determining the CSI and/or an estimated channel matrix, for example, in order to equalize doubly selective channels.

Furthermore, the receiver device may determine the plurality of signature roots $\rho_k$ based on the CSI. Each signature root of the plurality of signature roots is a nonzero complex point and may be geometrically represented in the form of a real part and an imaginary part in the complex plane, which has a real axis and an imaginary axis. Moreover, a geometric representation of the plurality of signature roots in the complex plane may indicate that the plurality of signature roots $\rho_k$ are uniformly distributed on a circumference of a circle in the complex plane, e.g., the plurality of signature roots $\rho_k$

may uniformly spread over a circle of radius a, such that $\rho_k = a e^{\frac{j2\pi k}{K}}$. Moreover, the receiver device may determine the radius *a* of the circle in the complex plane, based on the determined CSI. For instance, the estimated channel matrix may be used for determining the radius a of the circle in the complex plane. For example, the algorithm may compute an optimization metric (for instance, a mean square error (MSE)) and may then compute the radius of the circle based on the optimization metric. In some embodiments, the receiver device may estimate the radius of the circle and may further modify and/or optimize the radius of the circle, for instance, based on a gradient descent algorithm (GDA).

For example, the receiver device may construct one or more Vandermonde matrices. For example, the first Vandermonde matrix E may be constructed based on the plurality of signature roots and according to the Eq. (3) given above. The receiver device may use the constructed Vandermonde matrix E, which may have a size of *KxP* and may be used for performing the demodulation, and thus the demodulated signal may be obtained.

The receiver device may be a receiver for a transceiver device of the single-carrier modulation scheme. The receiver device is an advanced receiver for SC-LVDM in that it is able to deal with doubly selective channels.

The receiver device may be an electronic device comprising circuitry. The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the receiver device to perform the operations or methods described herein.

According to some embodiments, a two-stage time-frequency-domain equalization may be performed. For example, in some embodiments, a channel estimation algorithm may be introduced that may feed the detector to build the blocks for equalization.

In an implementation form of the first aspect, the receiver device is configured to determine the radius of the circle in the complex plane, based on the CSI.

In a further implementation form of the first aspect, for each PIC iteration, the receiver device is configured to construct a second Vandermonde matrix based on the plurality of signature roots, obtain a first matrix based on the first Vandermonde matrix, obtain a second matrix based on the first and the second Vandermonde matrices to estimate a first ISI in a current PIC iteration, perform a one-tap equalization by applying a diagonal matrix, which is obtained based on the first and the second Vandermonde matrices and an estimated channel matrix, on the demodulated signal or on a remainder of the demodulated signal obtained after removing a contribution of the estimated first ISI from estimated symbols in a previous PIC iteration, and obtain the symbols based on removing the contribution of the estimated first ISI in the current PIC iteration from the estimated symbols.

For example, the first matrix may be a matrix V that may be built from the demodulation (Vandermonde) matrix E that is constructed based on the plurality of signature roots and according to the Eq. (3) given above.

Moreover, the second matrix may be a matrix T that may be used for estimating the ISI, and may be given by:

$$ \mathrm{T} = \widetilde{\mathrm{T}} - \mathrm{diag}(\widetilde{\mathrm{T}}), \qquad \mathrm{Eq.}\ (7) $$

where

$$ \widetilde{\mathrm{T}} = \mathrm{E}\,\mathrm{H}\,\mathrm{M}, \qquad \mathrm{Eq.}\ (8) $$

where H is an estimated channel matrix that may be determined through the CSI estimation. Moreover, E and M are the two Vandermonde matrices, wherein E is a Vandermonde matrix obtained based on the plurality of the signature roots and used for performing the demodulation. Moreover, M is a Vandermonde matrix obtained based on the plurality of the signature roots and may further be used for performing the PIC iterations.

Furthermore, the receiver device may perform the one-tap equalization. For example, the receiver device may obtain the diagonal matrix ($D_e = \mathrm{diag}(\widetilde{\mathrm{T}})$) based on the two Vandermonde matrices E and M and the estimated channel matrix H, according to Eq. (9) as follows:

$$ \mathrm{D}_e = \mathrm{diag}(\widetilde{\mathrm{T}}), \qquad \mathrm{Eq.}\ (9) $$

where $\widetilde{\boldsymbol{T}}$ can be obtained according to Eq. (8).

In a further implementation form of the first aspect, during each PIC iteration, the first matrix and the second matrix are respectively applied on the estimated symbols, wherein the first matrix is applied for performing a frequency-domain transformation of the estimated symbols, and wherein the second matrix is applied for estimating the first ISI of transformed symbols in the frequency domain.

In a further implementation form of the first aspect, the first iterative procedure is performed until a converging of the set of PIC iterations meets a predefined criterion.

In a further implementation form of the first aspect, the symbols are further obtained based on performing a second iterative procedure on the obtained symbols output from the first iterative procedure, the second iterative procedure comprising a set of interference cancellation refinement (ICR) iterations.

In a further implementation form of the first aspect, the receiver device is further configured to obtain a cancelation filter based on the estimated channel matrix or the determined CSI of the communication channel.

In a further implementation form of the first aspect, for each ICR iteration, the receiver device is configured to apply the cancelation filter on the output of the first iterative procedure or an output of a previous ICR iteration, for estimating a second ISI, and obtain the symbols based on applying an inversion of a diagonal matrix on the filtered received signal, after removing a contribution of the estimated second ISI.

In a further implementation form of the first aspect, during each subsequent ICR iteration, a subsequent cancelation filter is applied on the obtained symbols output from the first iterative procedure or a previous ICR iteration, to estimate the second ISI.

In a further implementation form of the first aspect, the second iterative procedure is performed until a converging of the set of ICR iterations meets a predefined criterion.

A second aspect of the disclosure provides a receiver device for single-carrier modulation. The receiver device is configured to determine channel state information (CSI) of a communication channel between the receiver device and a transmitter device, determine a plurality of signature roots, based on the CSI, wherein each signature root of the plurality of signature roots is a nonzero complex point, and wherein the plurality of signature roots are uniformly distributed on a circumference of a circle in a complex plane, construct a first Vandermonde matrix and a second Vandermonde matrix based on the plurality of signature roots, perform a demodulation of a single-carrier modulated signal received from the transmitter device, based on the first Vandermonde matrix, to obtain a demodulated signal, and obtain symbols based on performing an iterative procedure on estimated symbols obtained by a frequency-domain equalization comprising a one-tap equalization followed by a post-equalization performed based on the second Vandermonde matrix, the iterative procedure comprising a set of interference cancellation refinement (ICR) iterations.

The receiver device of the second aspect may be similar or identical to the receiver device of the first aspect, and may perform a similar or identical function. The receiver device is an advanced receiver device for SC-LVDM in that it is able to deal with doubly selective channels. For example, the receiver device of the second aspect may determine the CSI, the radius of the circle, the plurality of signature roots, etc., as it is described for the receiver device of the first aspect.

In an implementation form of the second aspect, the receiver device is further configured to determine the radius of the circle in the complex plane, based on the CSI.

In a further implementation form of the second aspect, the receiver device is further configured to obtain a cancelation filter based on the determined CSI of the communication channel.

In a further implementation form of the second aspect, for each ICR iteration, the receiver device is configured to apply the cancelation filter on the estimated symbols during the first iteration or on an output of a previous ICR iteration, to estimate a second ISI, and obtain the symbols based on applying an inversion of a diagonal matrix on the filtered received signal, after removing a contribution of the estimated second ISI.

In a further implementation form of the second aspect, during each subsequent ICR iteration, a subsequent cancelation filter is applied on the symbols obtained from a previous ICR iteration to estimate the second ISI.

In a further implementation form of the second aspect, the iterative procedure is performed until a converging of the set of ICR iterations meets a predefined criterion.

In a further implementation form of the second aspect, the receiver device is further configured to compute a metric for determining the radius of the circle in the complex plane and/or evaluating the plurality of signature roots, based on the CSI of the communication channel.

In a further implementation form of the second aspect, the receiver device is further configured to modify individually each signature root from the plurality of signature roots based on a machine learning algorithm, in particular a gradient descent algorithm.

In a further implementation form of the second aspect, the receiver device is further configured to perform the demodulation of the single carrier modulated signal, considering the individual modification of each signature root.

According to some embodiments, the receiver device may perform a two-stage time-frequency domain equalization comprising the first iterative procedure and the second iterative procedure.

Further, a channel estimation algorithm is disclosed that feeds the detector to build the blocks for equalization.

In summary, the receiver device of the first aspect and the receiver device of the second aspect are designed to deal with doubly selective channels, such as doubly selective fading channels, without limiting the present disclosure to specific channels.

A third aspect of the present disclosure provides a system for single-carrier modulation, the system comprising a transmitter device configured to generate a single-carrier modulated signal based on constructing a Lagrange matrix or a Vandermonde matrix, and a receiver device according to the first aspect or any of its implementation forms, or a receiver device according to the second aspect or any of its implementation forms.

A fourth aspect of the present disclosure provides a method for a receiver device for single-carrier modulation, wherein the method comprises determining channel state information (CSI) of a communication channel between the receiver device and a transmitter device, determining a plurality of signature roots based on the CSI, wherein each signature root of the plurality of signature roots is a nonzero complex point, and wherein the plurality of signature roots are uniformly distributed on a circumference of a circle in a complex plane, constructing a first Vandermonde matrix based on the plurality of signature roots, performing a demodulation of a single-carrier modulated signal received from the transmitter device, based on the first Vandermonde matrix, to obtain a demodulated signal, and obtaining symbols based on performing a first iterative procedure on the demodulated signal, the first iterative procedure comprising a set of PIC iterations.

In an implementation form of the fourth aspect, the method further comprises determining the radius of the circle in the complex plane, based on the CSI.

In a further implementation form of the fourth aspect, for each PIC iteration, the method further comprises constructing a second Vandermonde matrix based on the plurality of signature roots, obtaining a first matrix based on the first Vandermonde matrix, obtaining a second matrix based on the first and the second Vandermonde matrices to estimate a first ISI in a current PIC iteration, performing a one-tap equalization by applying a diagonal matrix obtained based on the first and the second Vandermonde matrices and an estimated channel matrix on the demodulated signal or on a remainder of the demodulated signal obtained after removing a contribution of the estimated first ISI from estimated symbols in the previous PIC iteration, and obtaining the symbols based on removing the contribution of the estimated first ISI in the current PIC iteration from the estimated symbols.

In a further implementation form of the fourth aspect, during each PIC iteration, the first matrix and the second matrix are respectively applied on the estimated symbols, wherein the first matrix is applied for performing a frequency domain transformation of the estimated symbols, and wherein the second matrix is applied to estimate the first ISI of transformed symbols in the frequency domain.

In a further implementation form of the fourth aspect, the first iterative procedure is performed until a converging of the set of PIC iterations meets a predefined criterion.

In a further implementation form of the fourth aspect, the symbols are further obtained based on performing a second iterative procedure on the obtained symbols output from the first iterative procedure, the second iterative procedure comprising a set of interference cancellation refinement, ICR, iterations.

In a further implementation form of the fourth aspect, the method further comprises obtaining a cancelation filter based on the estimated channel matrix or the determined CSI of the communication channel.

In a further implementation form of the fourth aspect, for each ICR iteration, the method further comprises applying the cancelation filter on the output of the first iterative procedure or an output of a previous ICR iteration to estimate a second ISI, and obtaining the symbols based on applying an inversion of a diagonal matrix on the filtered received signal, after removing a contribution of the estimated second ISI.

In a further implementation form of the fourth aspect, during each subsequent ICR iteration, a subsequent cancelation filter is applied on the obtained symbols output from the first iterative procedure or a previous ICR iteration, to estimate the second ISI.

In a further implementation form of the fourth aspect, the second iterative procedure is performed until a converging of the set of ICR iterations meets a predefined criterion.

A fifth aspect of the disclosure provides a method for a receiver device for single-carrier modulation, wherein the method comprises determining channel state information (CSI) of a communication channel between the receiver device and a transmitter device, determining a plurality of signature roots, wherein each signature root of the plurality of signature roots is a nonzero complex point, and wherein the plurality of signature roots are uniformly distributed on a circumference of a circle in a complex plane, constructing a first Vandermonde matrix and a second Vandermonde matrix based on the plurality of signature roots, performing a demodulation of a single-carrier modulated signal received from the transmitter device, based on the first Vandermonde matrix, to obtain a demodulated signal, and obtaining symbols based on performing an iterative procedure on estimated symbols obtained by a frequency domain equalization comprising a one-tap equalization followed by a post-equalization performed based on the second Vandermonde matrix, the iterative procedure comprising a set of ICR iterations.

In an implementation form of the fifth aspect, the method further comprises determining the radius of the circle in the complex plane, based on the CSI.

In a further implementation form of the fifth aspect, the method further comprises obtaining a cancelation filter based on the determined CSI of the communication channel.

In a further implementation form of the fifth aspect, for each ICR iteration, the method further comprises applying the cancelation filter on the estimated symbols during the first iteration or on an output of a previous ICR iteration to estimate a second ISI, and obtaining the symbols based on applying an inversion of a diagonal matrix on the filtered received signal, after removing a contribution of the estimated second ISI.

In a further implementation form of the fifth aspect, during each subsequent ICR iteration, a subsequent cancelation filter is applied on the symbols obtained from a previous ICR iteration to estimate the second ISI.

In a further implementation form of the fifth aspect, the iterative procedure is performed until a converging of the set of ICR iterations meets a predefined criterion.

In a further implementation form of the fifth aspect, the method further comprises computing a metric for determining the radius of the circle in the complex plane and/or evaluating the plurality of signature roots, based on the CSI of the communication channel.

In a further implementation form of the fifth aspect, the method further comprises modifying individually a signature root from the plurality of signature roots based on a machine learning algorithm, in particular a gradient descent algorithm.

In a further implementation form of the fifth aspect, the method further comprises performing the demodulation of the single-carrier modulated signal, based on the individually modified signature root.

A sixth aspect of the present disclosure provides a computer program comprising a program code for performing the method according to the fourth aspect or the fifth aspect or any of their implementation forms.

A seventh aspect of the present disclosure provides a non-transitory storage medium storing executable program code which, when executed by a processor, causes the method according to the fourth aspect or the fifth aspect or any of their implementation forms to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms will be explained in the following description of specific embodiments in relation to the enclosed drawings, in which:

FIG. 1        depicts a schematic view of a receiver device for single-carrier modulation, according to an embodiment of the present disclosure;

FIG. 2        depicts a schematic view of another receiver device for single-carrier modulation, according to an embodiment of the present disclosure;

FIG. 3        depicts a schematic view of a system for single-carrier modulation, according to an embodiment of the present disclosure;

FIG. 4        depicts a schematic view of the system for a SC-LVDM for a doubly selective channel;

FIG. 5        depicts pilot patterns using dedicated LVDM symbols;

FIG. 6        depicts *NP* stacked pilot vectors, where (*NP* - 1) are new pilot vectors with one buffered pilot vector;

FIG. 7        depicts a diagram illustrating the receiver device obtaining symbols based on performing the first iterative procedure comprising a set of PIC iterations;

FIG. 8        depicts a diagram illustrating performing a first iterative procedure comprising a set of PIC iterations followed by a second iterative procedure comprising a set of ICR iterations;

FIG. 9        depicts exemplary performance results of the receiver device, when performing only the first iterative procedure comprising the set of PIC iterations;

FIG. 10       depicts exemplary performance results of the receiver device, when performing only the second iterative procedure comprising the set of ICR iterations;

FIG. 11          depicts exemplary performance results of the receiver device, when performing the first iterative procedure and the second iterative procedure;

FIG. 12          depicts exemplary performance results of the receiver device, in 3GPP ETU channels, using $L = 10$;

FIG. 13          depicts exemplary performance results of the receiver device, in 3GPP EVB channels, using $L = 39$;

FIGS. 14A-14B    depict a sensitivity to the channel estimation and the error in the estimation of the radius $a_{opt}$ of the circle;

FIG. 15          depicts a flowchart of a method for a receiver device for single-carrier modulation, according to an embodiment of the present disclosure;

FIG. 16          depicts a flowchart of a method for another receiver device for single-carrier modulation, according to an embodiment of the present disclosure;

FIG. 17          depicts an exemplary embodiment of a SC-LVDM system comprising a single-carrier transmitter device and a receiver device using a Vandermonde matrix for demodulation; and

FIG. 18          depicts a schematic view for the SC-LVDM system of FIG. 17 comprising a receiver device using a radius of a circle for building its modules.

DETAILED DESCRIPTION OF EMBODIMENTS

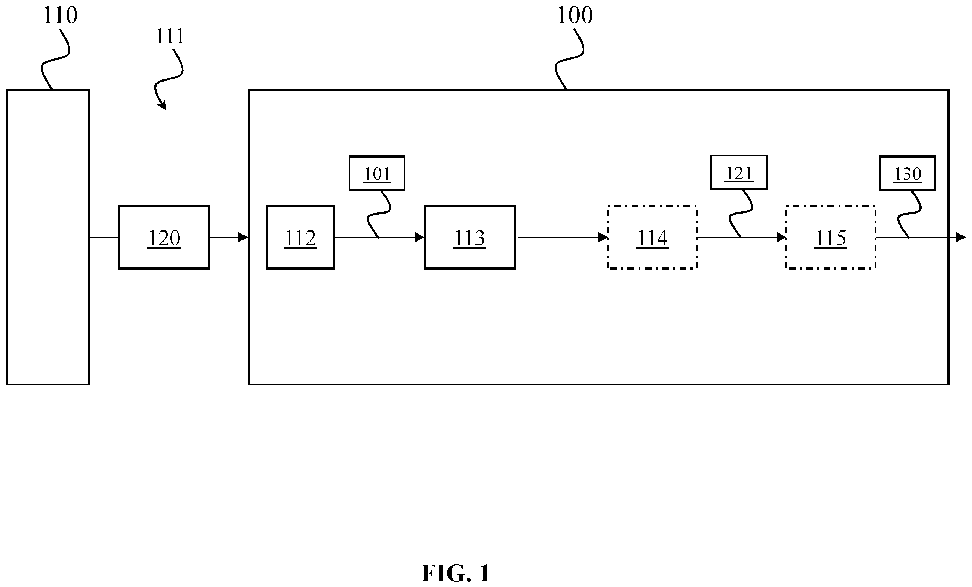

FIG. 1 shows a schematic view of a receiver device 100 for single-carrier modulation, according to an embodiment of the present disclosure.

The receiver device 100 is configured to determine a channel state information (CSI) 101 of a communication channel 111 between the receiver device 100 and a transmitter device 110. For example, the receiver device 100 comprises a channel estimation unit 112 which may determine the CSI 101.

The receiver device 100 is further configured to determine a plurality of signature roots based on the CSI 101, wherein each signature root of the plurality of signature roots is a nonzero complex point, and wherein the plurality of signature roots are uniformly distributed on a circumference of a circle in a complex plane.

For example, the receiver device 100 comprises a determination unit 113 that may determine the plurality of signature roots based on the CSI 101. Each signature root of the plurality of signature roots is a nonzero complex point, and may be geometrically represented in the form of a real part and an imaginary part in the complex plane, which has a real axis and an imaginary axis. Moreover, a geometric representation of the plurality of signature roots, i.e., the non-zero complex points, in the complex plane may indicate that the plurality of signature roots $\rho_k$ are uniformly distributed on a circumference of a circle in the complex plane, e.g., the plurality of signature roots $\rho_k$ may uniformly spread over a circle of radius a, such that $\rho_k = ae^{\frac{j2\pi k}{K}}$ .

Moreover, the receiver device may determine the radius $a$ of the circle in the complex plane based on the CSI 101, and may further modify and/or optimize the determined radius of the circle in the complex plane, e.g., using a gradient descent algorithm (GDA).

The receiver device 100 is further configured to construct a first Vandermonde matrix based on the plurality of signature roots. For example, the receiver device 100 may construct the first Vandermonde matrix E based on the plurality of signature roots, according to Eq. (3), as described above.

Moreover, in some embodiments, the plurality of signature roots may be used for constructing at least one other Vandermonde matrix. For example, the receiver device 100 may construct a second Vandermonde matrix M according to Eq. (6), which may be used for performing a post-equalization.

Moreover, by determining the plurality of signature roots $\rho_k$ such that they are uniformly distributed on a circumference of a circle, it may be possible to reduce an optimization problem. For instance, a first matrix V may be determined based on the first Vandermonde matrix E. Moreover, the second Vandermonde matrix M may be the inverse of the first matrix V, i.e., the second Vandermonde matrix M may be the inverse of E(:, 1:K). Therefore, by determining the signature roots $\rho_k$ such that they are uniformly distributed on a circumference of a circle and/or by further optimizing the radius of the circle, it may be possible to reduce the optimization problem, for example, from a K-dimensional filed optimization to a one dimension filed optimization problem.

Moreover, by determining the plurality of signature roots $\rho_k$ such that they are uniformly distributed on a circumference of a circle, a cost related to construction of the Vandermonde matrices may be reduced.

For example, the second Vandermonde matrix M may have a form of a simple Vandermonde matrix when it is constructed based on the plurality of signature roots $\rho_k$ that are uniformly distributed on a circumference of a circle compared to when the signature roots $\rho_k$ are distributed in a more complex manner. Moreover, since the second Vandermonde matrix M represents a simple Vandermonde matrix, therefore, a cost related to determining the inverse of the Vandermonde matrix E(:, 1:K) may also be reduced.

Moreover, the receiver device 100 may optionally comprise a demodulator block 114. Moreover, the receiver device 100, e.g., its demodulator block 114, may determine the plurality of signature roots $\rho_k$ that are uniformly distributed on the circumference of the circle as, for instance, determined by the determination unit 113. Furthermore, the demodulator block 114 may construct the first Vandermonde matrix (i.e., the matrix E according to Eq. (3)) based on the plurality of signature roots $\rho_k$.

The receiver device 100 is further configured to perform a demodulation of a single-carrier modulated signal 120 received from the transmitter device 110, based on the first Vandermonde matrix E, to obtain a demodulated signal 121.

In particular, the receiver device 100 may receive the single-carrier modulated signal 120 from the transmitter device 110 via the communication channel 111. Moreover, the demodulator block 114 of the receiver device 100 may perform the demodulation on the single-carrier modulated signal 120 using the constructed Vandermonde matrix E, and may further obtain the demodulated signal 121. The modulation operation may be performed according to Eq. (4), as described above.

For example, the receiver device 100 may apply the first Vandermonde matrix E to a received signal in time domain r to obtain a demodulated signal y, according to Eq. (4), as described above.

The receiver device 100 is further configured to obtain symbols 130 based on performing a first iterative procedure on the demodulated signal 121, the first iterative procedure comprising a set of PIC iterations.

For example, the receiver device 100 may optionally comprise a PIC block 115. Moreover, the PIC block 115 of receiver device 100 may perform the first iterative procedure comprising the set of PIC iterations on the demodulated signal 121. The PIC block 115 may further obtain the symbols 130 by performing the first iterative procedure.

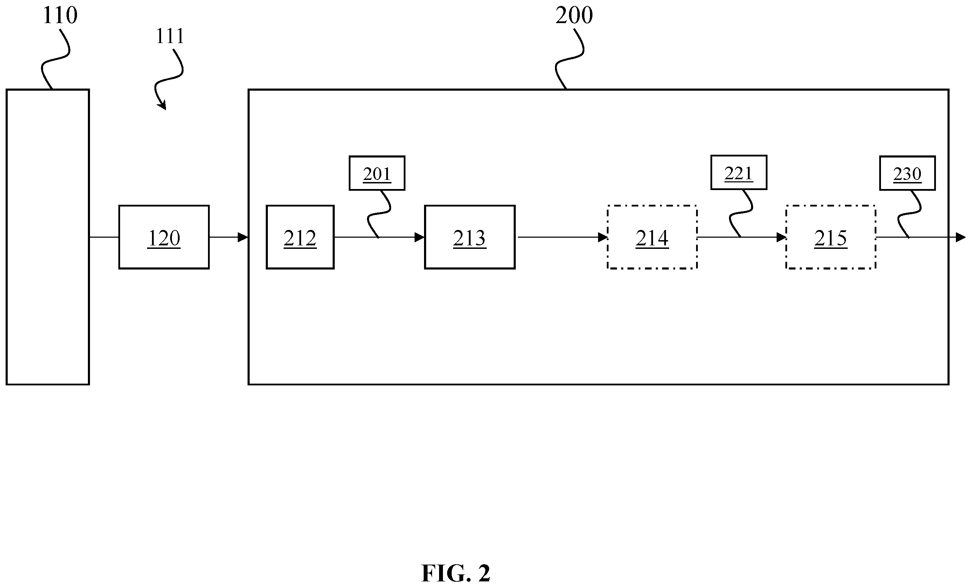

The receiver device 100 may comprise processing circuitry (not shown in FIG. 1) configured to perform, conduct or initiate the various operations of the receiver device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the receiver device 100 to perform, conduct or initiate the operations or methods described herein. FIG. 2 shows a schematic view of another receiver device 200 for single-carrier modulation, according to an embodiment of the present disclosure.

The receiver device 200 is configured to determine CSI 201 of a communication channel 111 between the receiver device 200 and a transmitter device 110. For example, the receiver device 200 comprises a channel estimation unit 212 which may determine the CSI 201.

The receiver device 200 is further configured to determine a plurality of signature roots based on the CSI 201, wherein each signature root of the plurality of signature roots is a nonzero complex point, and wherein the plurality of signature roots are uniformly distributed on a circumference of a circle in a complex plane.

For example, the receiver device 200 comprises a determination unit 213 that may determine the plurality of signature roots based on the CSI 201. Each signature root of the plurality of signature roots is a nonzero complex point, and may be geometrically represented in the form of a real part and an imaginary part in the complex plane, which has a real axis and an imaginary axis. Moreover, a geometric representation of the plurality of signature roots, i.e., the non-zero complex points, in the complex plane may indicate that the plurality of signature roots $\rho_k$ are uniformly distributed on a circumference of a circle in the complex plane, e.g., the plurality of signature roots $\rho_k$ may uniformly spread over a circle of radius a, such that $\rho_k = a e^{\frac{j2\pi k}{K}}$ .

Moreover, the receiver device 200 may determine the radius *a* of the circle in the complex plane based on the CSI 201, and may optionally modify and/or optimize the determined radius of the circle in the complex plane, e.g., based on a GDA.

The receiver device 200 is further configured to construct a first Vandermonde matrix and a second Vandermonde matrix based on the plurality of signature roots. For example, the receiver device 200 may construct the first Vandermonde matrix E based on the plurality of signature roots, according to Eq. (3), as described above. Moreover, the receiver device 200 may construct the second Vandermonde matrix M according to Eq. (6), as described above.

For example, the receiver device 200 may optionally comprise a demodulator block 214. Moreover, the receiver device 200, e.g., its demodulator block 214, may determine the plurality of signature roots $\rho_k$ that are uniformly distributed on the circumference of the circle as, for instance, determined by the determination unit 213. Furthermore, the demodulator block 214 may construct the first Vandermonde matrix and the second Vandermonde matrix based on the plurality of signature roots $\rho_k$.

The receiver device 200 is further configured to perform a demodulation of a single-carrier modulated signal 120 received from the transmitter device 110, based on the first Vandermonde matrix, to obtain a demodulated signal 221. The modulation operation may be performed according to Eq. (4), as described above.

For example, the receiver device 200 may apply the first Vandermonde matrix E to a received signal in time domain r to obtain a demodulated signal y, according to Eq. (4), as described above.

For example, the receiver device 200 may receive the single-carrier modulated signal 120 from the transmitter device 110. Moreover, the demodulator block 214 of the receiver device 200 may perform the demodulation on the single-carrier modulated signal 120 using the constructed first Vandermonde matrix, and may further obtain the demodulated signal 221.

The receiver device 200 is further configured to obtain symbols 230 based on performing an iterative procedure on estimated symbols obtained by a frequency domain equalization, the iterative procedure comprising a set of ICR iterations.

For example, the receiver device 200 may optionally comprise an ICR block 215. Moreover, the ICR block 215 of receiver device 200 may perform the iterative procedure comprising the set of ICR iterations on the estimated symbols obtained by the frequency-domain equalization, and the receiver device 200 may further obtain the symbols 230.

The receiver device 200 may comprise processing circuitry (not shown in FIG. 2) configured to perform, conduct or initiate the various operations of the receiver device 200 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the receiver device 100 to perform, conduct or initiate the operations or methods described herein.

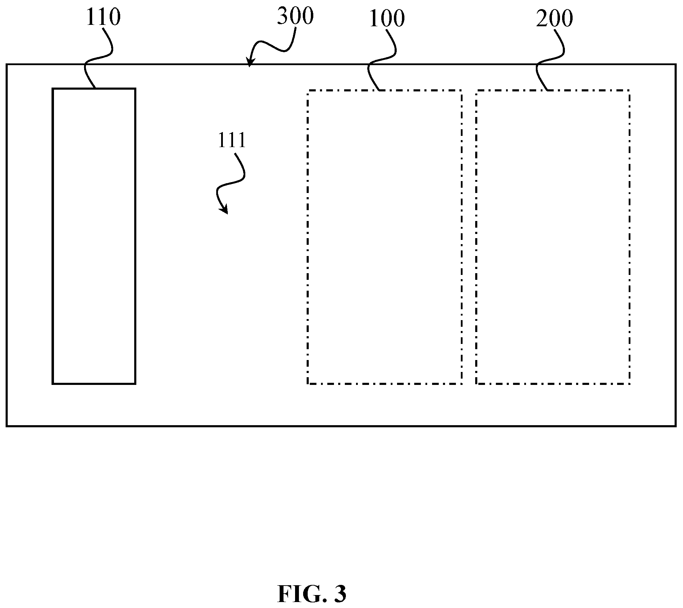

FIG. 3 depicts a schematic view of a system 300 for single-carrier modulation, according to an embodiment of the present disclosure.

The system 300 comprises a transmitter device 110 that is configured to generate a single-carrier modulated signal based on constructing a Lagrange matrix or a Vandermonde matrix. The system 300 further comprises a receiver device, which may be the receiver device 100 or the receiver device 200 illustrated in FIG. 1 and FIG. 2, respectively.

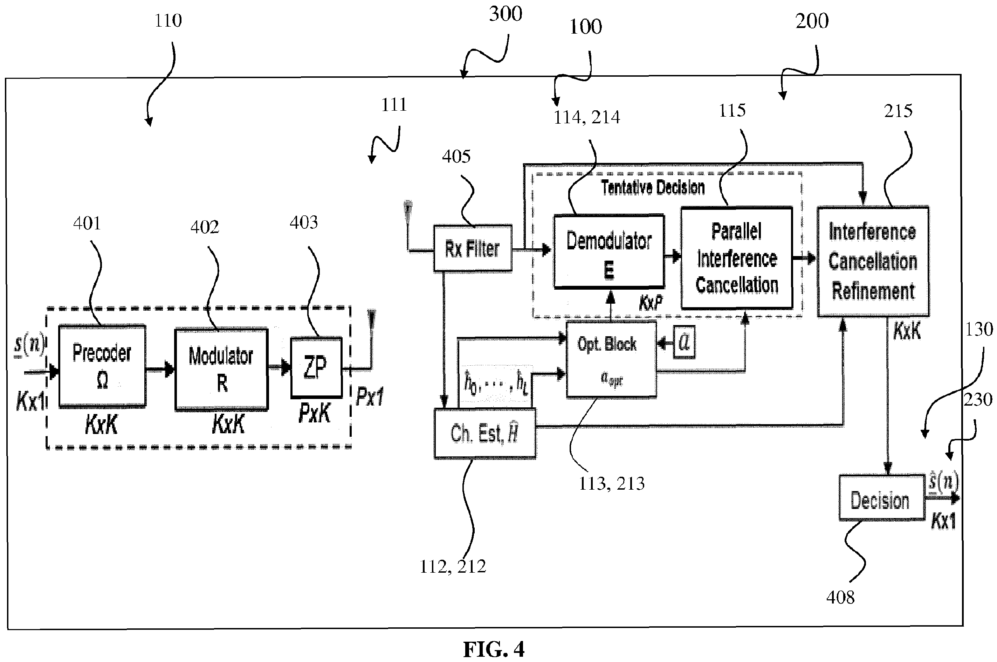

FIG. 4 depicts a schematic view of the system 300 for a SC-LVDM for a doubly selective channel.

The system 300 comprises the transmitter device 110 that includes a precoder 401, a modulator 402, and a ZP block 403. Moreover, the communication channel 111 of the system 300 comprises the receiver filter 405. The system 300 further comprises the receiver device (e.g., it may be the receiver device 100 of FIG.1 or the receiver device 200 of FIG. 2), which includes the demodulator 114, 214. The demodulator 114, 214 may perform a demodulation of the single-carrier modulated signal based on the first Vandermonde matrix E and may further obtain a demodulated signal. The first iterative procedure is exemplarily shown as a tentative decision block comprising the PIC block 115, the second iterative procedure is exemplarily shown as the ICR block 215, the channel estimation block 112, 212, the determination unit 113, 213 (e.g., an optimization block), and the decision block 408.

Moreover, the receiver device 100 in the system 300 may perform the first iterative procedure and may further obtain symbols 130. Furthermore, the receiver device 200 in the system 300 may perform the second iterative procedure and may further obtain symbols 230. Further, the receiver device 100 may perform both the first iterative procedure and the second iterative procedure and may further obtain symbols 230.

In the following, the system 300 is discussed as an example for time-frequency domain equalizations for the SC-LVDM, without limiting the present disclosure.

In order to deal with doubly selective channels, a channel estimation (CE) is proposed. For example, the channel estimation unit 112 of the receiver device 100 or the channel estimation unit 212 of the receiver device 200 may run a channel estimation algorithm for obtaining the CSI or estimated channel matrix, in order to deal with doubly selective channels.

The system 300 may show a low-complexity implementation and its performance may outperform the performance of the conventional SC-FDE.

For example, the receiver device 100 or the receiver device 200 may estimate (e.g., based on the MSE), the modified, optimized radius of the circle $a_{opt}$, which may be used for the blocks of the receiver device and performing the equalization processing.

The receiver device 100 or the receiver device 200 may further perform a time-frequency domain equalization procedure, for example, in order to overcome one or more issues related to time-varying channel.

For instance, the receiver device 100 or the receiver device 200 may overcome an issue related to outdated CSI that breaks the optimization of the plurality of signature roots. Moreover, the receiver device 100 or the receiver device 200 may overcome an issue related to the ISI that makes the one-tap equalization inadequate.

The above issues may be solved by a time-frequency domain equalization discussed in the following.

The received time-domain signal is given by Eq. (10) as follows:

$$
\mathbf{r} = \underbrace{\begin{bmatrix}
h(0,0) & 0 & \cdots & 0 \\
h(1,1) & h(1,0) & \ddots & \vdots \\
\vdots & h(2,1) & \ddots & 0 \\
h(L,L) & \vdots & \ddots & h(K-1,0) \\
0 & h(L+1,L) & \ddots & h(K,1) \\
\vdots & \vdots & \ddots & \vdots \\
0 & 0 & \ddots & h(P-1,L)
\end{bmatrix}}_{\mathbf{H}_t} \mathbf{s} + \eta,
\qquad \text{Eq. (10)}
$$

where $H_t$ is the time-varying channel matrix, where $h(n, l) = h_c(nT_s, lT_s)$ and $h_c(t, \tau)$ is the time-varying impulse response of the channel that includes transmitter-receiver filters as well as the doubly selective propagation effects.

In the received signal expression, the channel impulse response may vary even within one SC-LVDM symbol, which may make the detection processing challenging.

For example, at a first step, the receiver device 100 or the receiver device 200 may run a channel estimation algorithm. Moreover, the receiver device 100 or the receiver device 200 may estimate some values of optimized radius $a_{opt}$.

Furthermore, at a second step, the receiver device 100 or the receiver device 200 may use the estimated channel to detect the SC-LVDM symbols, and may further performs operations for removing a contribution of ISI.

In particular, during the first step, a channel estimation (e.g., a channel estimation algorithm) may be performed. For example, by assuming that $\tau_{max}$ and $f_D$ are the delay spread and the Doppler spread, respectively, and $T_s$ is the sampling period at the receiver device, both $\tau_{max}$ and $f_D$ may be measured. Moreover, the $NT_s$ may be the frame duration.

Furthermore, a Slepian basis expansion (SBE) may be used (generally known to the skilled person), where $h_c(t, \tau)$ will be presented for $t \in [kNT_s, (k+1)NT_s)$ by using:

1. Q + 1 coefficients $\{c_{q,l}\}_{q=1}^{Q+1}$ that remain invariant per block, but are allowed to change with k, and

2. Q + 1 Slepian sequences $\{u_q\}_{q=1}^{Q+1}$ that capture the time variation, but are common for all $k$,

Further, each time-varying delay tap of the channel impulse response may be approximated as follows:

$$
h[n;\theta] = \sum_{l=0}^{L} \delta[\theta - l] \sum_{q=1}^{Q+1} c_{q,l}\, u_q(n),
\qquad \text{Eq. (11)}
$$

where $L = \lfloor \tau_{max}/T_s \rfloor$ and $Q = 2\lceil f_D NT_s \rceil$, and where $\lfloor \cdot \rfloor$ and $\lceil \cdot \rceil$ are the integer floor and the the integer ceiling, respectively.

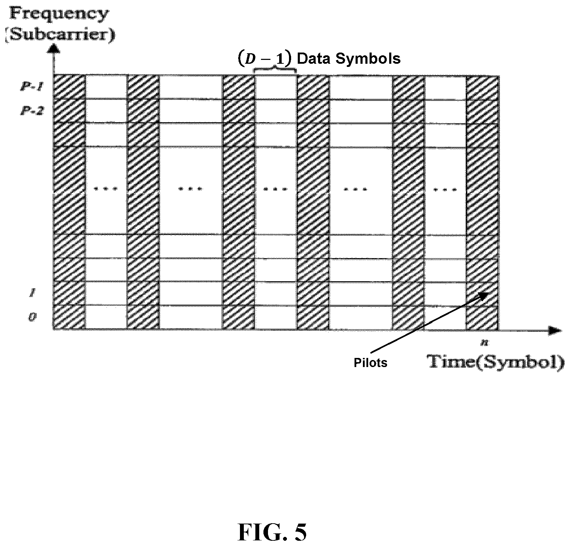

FIG. 5 depicts a diagram illustrating the transmitted SC-LVDM frames, wherein *NP* training sequence vectors are inserted every D transmitted symbol vectors (one pilot vector followed by (D-1) SC-LVDM symbols), wherein $\left\lfloor \frac{N}{P} \right\rfloor = (NP - 1) \times D + 1$ and $P = K + L$ is the size of the transmitted SC-LVDM symbols.

In the diagram illustrated in FIG. 5, $NP = 6$ and every pilot symbol vector is followed by $(D - 1)$ SC-LVDM symbols (vectors).

In the following, an exemplary procedure is presented for estimating the $(Q + 1) \times (L + 1)$ coefficients, $\left\{ c_{q,l} \right\}_{q=1}^{Q+1}$ discussed above, which may lead to the channel estimation over the coherence time period ($NT_s$), and using the SBE approximation, without limiting the present disclosure to this specific procedure.

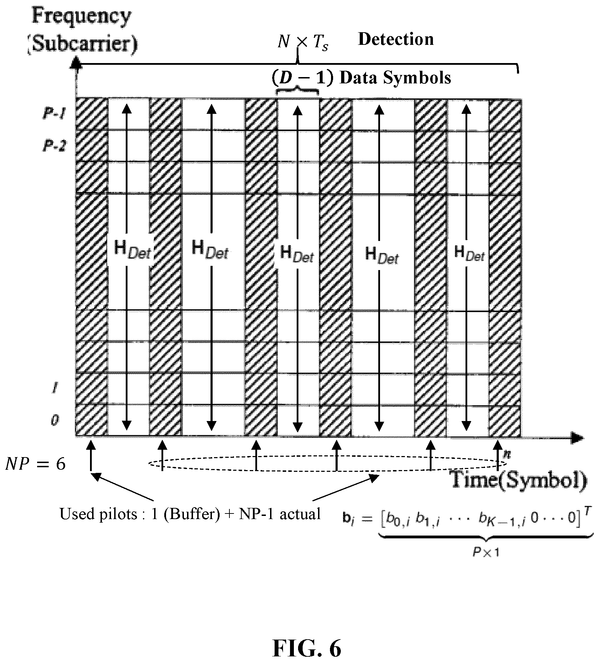

The receiver device 100 or the receiver device 200 may stack the received $NP$ pilot vectors (where one is buffered) in $y_b$ (see FIG. 6). Moreover, $y_b$ may have a size of $((NP \times P) \times 1)$ and may be obtained according to Eq. (12) as follows:

$$y_b = \phi_b h + \eta_b, \qquad \text{Eq. (12)}$$

where

$$h = \begin{bmatrix} h_1^T & \cdots & h_{Q+1}^T \end{bmatrix}^T \qquad \text{Eq. (13)}$$

where

$$h_q = \begin{bmatrix} c_{q,0} \\ \vdots \\ c_{q,L} \end{bmatrix} \qquad \text{Eq. (14)}$$

is the vector stacking the $q^{th}$ coefficient of every $l^{th}$ delay tap to be determined, and

$$\Phi_b = \begin{bmatrix} D_{1,1}^b B_1 & \cdots & D_{Q+1,1}^b B_1 \\ \vdots & \cdots & \vdots \\ D_{1,NP}^b B_{NP} & \cdots & D_{Q+1,NP}^b B_{NP} \end{bmatrix} \qquad \text{Eq. (15)}$$

has a size $((NP \times P) \times ((Q + 1) \times (L + 1)))$, where, in above Eq. (15),

$$B_i = \begin{bmatrix} b_{0,i} & 0 & \cdots & 0 \\ b_{1,i} & & & \vdots \\ \vdots & \ddots & \ddots & 0 \\ b_{K-1,i} & & & b_{0,i} \\ 0 & \ddots & \ddots & b_{1,i} \\ \vdots & \ddots & \ddots & \vdots \\ 0 & \cdots & 0 & b_{K-1,i} \end{bmatrix} \underbrace{\phantom{xxxxxxxxxxxxxxxx}}_{P \times (L+1)} \qquad \text{Eq. (16)}$$

is a Toeplitz matrix formed by the transmitted pilot vectors. For example, the Toeplitz matrix may be formed by a number of $(K + 1)$ modulated pilot symbols followed by a number of $L$-zeros padded symbols, i.e., L zeros are added at the end of the modulated pilot symbols, as shown in FIG. 6, and $\mathrm{D}_{\lambda,i}^{b}$ is a $P \times P$ diagonal matrix and can be obtained according to Eq. (17) as follows:

$$\mathbf{D}_{q,i}^{b} = \underbrace{\mathbf{diag}\left[u_q(\mathbf{t}(\mathbf{b}_i))\right]}_{P \times P} \qquad \text{Eq. (17)}$$

where

$$\mathbf{t}(\mathbf{b}_i) = ((i - 1)\, P\, D : P - 1 + (i - 1)\, P\, D). \qquad \text{Eq. (18)}$$

FIG. 6 depicts a diagram illustrating $NP$ stacked pilot vectors comprising $(NP - 1)$ new pilot vectors shown along with one buffered pilot vector.

As discussed, the receiver device 100 or the receiver device 200 may determine the radius of the circle based on the determined CSI. For example, the receiver device 100 or the receiver device 200, particularly in the CE block 112, 212, may apply the linear MMSE channel estimator and may further obtain the estimated channel as follows:

$$\hat{\mathbf{h}} = \frac{1}{\sigma_\eta^2}\left(\mathbf{R}_h^{-1} + \frac{1}{\sigma_\eta^2}\boldsymbol{\Phi}_b^H\boldsymbol{\Phi}_b\right)^{-1}\boldsymbol{\Phi}_b^H\mathbf{y}_b \qquad \text{Eq. (19)}$$

where

$$\mathbf{R}_h = E\left[\mathbf{h}\mathbf{h}^H\right] \qquad \text{Eq. (20)}$$

Furthermore, it may be assumed that $R_h$ is known at the receiver device 100 or the receiver device 200. For example, since $R_h$ depends only on the channel delay profile, it may be determined by the receiver device 100 or the receiver device 200.

The aforementioned details are summarized in the following algorithm, wherein the (estimated) channel matrix $H_{Det}$, which is the output of the algorithm, may be used to detect the actual $(D-1)(NP-1)$ received SC-LVDM symbols (see FIG. 6).

Therefore, the receiver device 100 or the receiver device 200 may perform algorithm 1 to output and obtain (e.g., take) the m-th $((L + 1) \times K)$ channel matrix as follows:

$H_{a,m} = H_{det}(:, (1: K) + (m - 1)K)$, where m = 1 : $(D - 1)NP$.

Therefore, Eq. (21) may be obtained as follows:

$$\mathbf{h}_{eq,m} = \frac{1}{K}\sum_{k=1}^{K}\mathbf{H}_{a,m}(:, k). \qquad \text{Eq. (21)}$$

Moreover, the determined radius $a$ may be modified (optimized) at the receiver device 100 or the receiver device 200 through the corresponding determination unit 113, 213 (e.g., the optimization block) and by using a metric (such as the MSE).

Moreover, the optimized radius of the circle may depend on the channel realization, and may be different for different LVDM symbols. Therefore, the receiver device 100 or the receiver device 200 may obtain, for each LVDM symbol, a respective optimized radius of the circle $a_{opt}$. The optimized radius(s) $a_{opt,m}$ obtained for different LVDM symbols may further be used, to build different blocks of the receiver device 100 or the receiver device 200. For example, for the m-th LVDM symbol, the receiver device 100 or the receiver device 200 uses m-th radius of the circle $a_{opt,m}$, estimated according to Eq. (22) as follows:

$$a_{opt,m} = \underset{a}{\arg\min} \; \sigma_\eta^2 \frac{1 - a^{2K}}{K^3} \sum_{k=0}^{K-1} \sum_{n=0}^{K-1} \frac{1 - a^{-2P} e^{\frac{j2\pi(k-n)}{K}}}{H_{eq}(\rho_k)^* H_{eq}(\rho_n)\left(2 - a^2 e^{\frac{j2\pi(n-k)}{K}} - a^{-2} e^{\frac{j2\pi(k-n)}{K}}\right)}$$

$$\text{Eq. (22)}$$

where

$$H_{eq}(\rho_k) = \sum_{l=0}^{L} \mathsf{h}_{eq,m}(l) \rho_k^{-l} \qquad\qquad \text{Eq. (23)}$$

Moreover, each frame is structured such that, one pilot symbol comprising K + L samples is followed by (D - 1) LVDM symbols, where each LVDM symbol comprises K + L samples, too.

The above-mentioned algorithm for joint estimation may further be summarized according to Eq. (24).

The inputs of the algorithm are $R_h$ and $y_b$, and the output of the algorithm is $H_{Det}$. Moreover, the algorithm includes five computing steps, wherein each computing step of the algorithm is indicated with a bullet point as follows:

**Inputs:** $R_h, y_b$.
**Outputs:** $H_{det}$.
- Compute $t(b_i), D_{\lambda,i}^b, B_i,$ and $\Phi_b$.
- Compute $\hat{h} = \left(\sigma_\eta^2 R_h^{-1} + \Phi_b^H \Phi_b\right)^{-1} \Phi_b^H y_b$.
- For $p = 1:NP$
  - For $m = 1:D-1$
    - Compute $n = (p-1)D + m$.
    - $t_1 \leftarrow [t_1 \quad (1+nP):(K+nP)]$.
  - End for
- End for
- Compute, $l = 1:L+1,$ and $i = 1:K(D-1)NP$

$$H_{det}(l,i) = \sum_{q=1}^{Q+1} c_{q,l} u_q\big(t_1(i)\big)$$

$$\text{Eq. (24)}$$

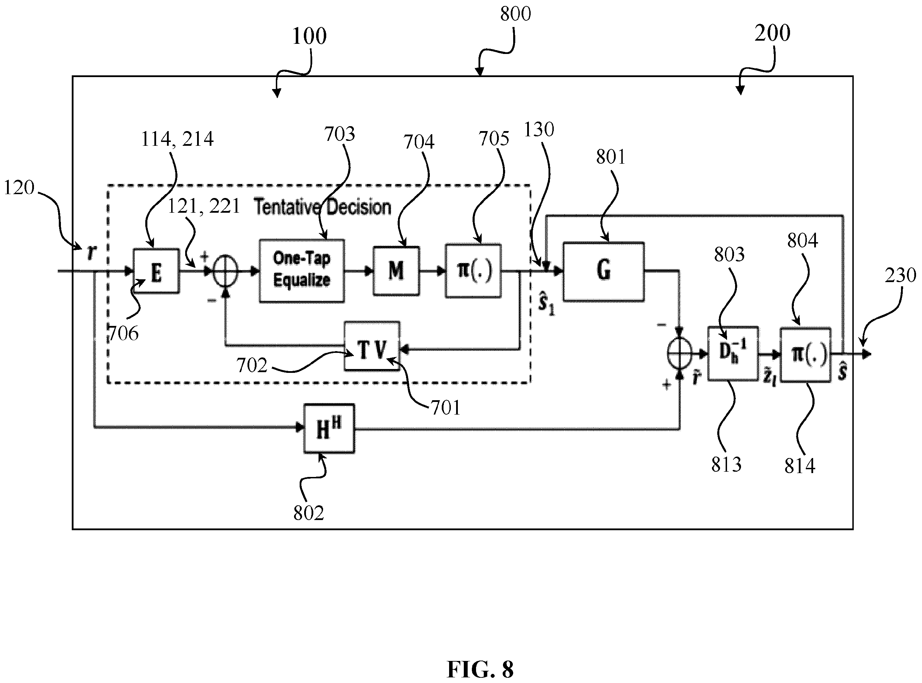

The next step is the detection phase. During the detection phase, the receiver device 100 or the receiver device 200 may use the m-th $((L+1) \times K)$ channel matrix $H_{D,m} = H_{Det}(:, (1:K) + (m-1)K)$ to detect the m-th SC-LVDM received symbol based on performing two iterative procedures using time-frequency processing (see FIG. 8).

In the following, the first iterative procedure is also referred to as the tentative decision step, and the second iterative procedure is also referred to as the interference cancellation refinement step.

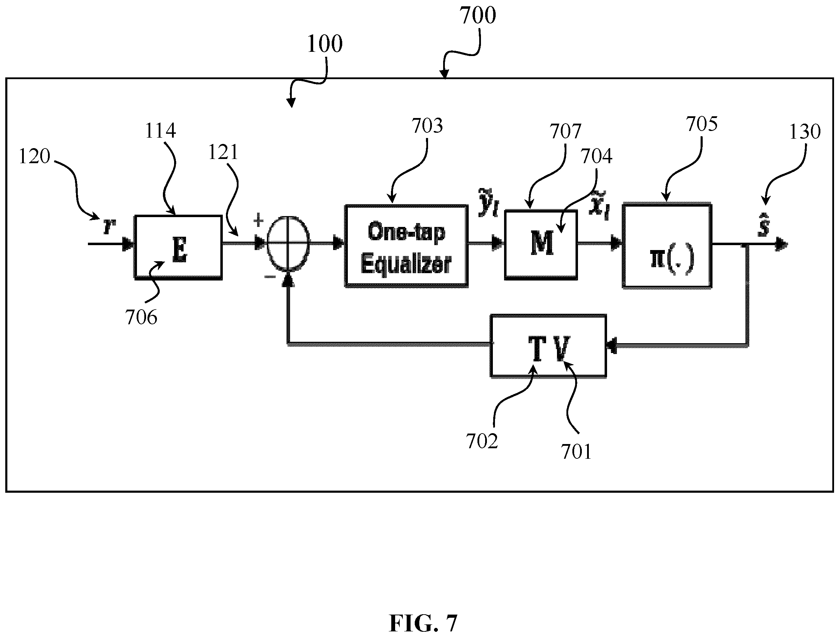

Reference is now made to FIG. 7, which depicts a diagram 700 illustrating the receiver device 100 obtaining symbols based on performing the first iterative procedure comprising a set of PIC iterations.

As can be derived from FIG. 7, the first iterative procedure (i.e., the tentative decision) is made based on the parallel interference cancellation technique that is applied to the demodulated received signal 121 in the frequency domain y, given by:

$$y = E[m]\, r, \qquad\qquad \text{Eq. (25)}$$

where r is the received signal 120 (in the time domain), and the Vandermonde matrix can be obtained as follows:

$$\begin{bmatrix} 1 & \rho_{0,m}^{-1} & \cdots & \rho_{0,m}^{1-P} \\ 1 & \rho_{1,m}^{-1} & \cdots & \rho_{1,m}^{1-P} \\ \vdots & \vdots & & \vdots \\ 1 & \rho_{K-1,m}^{-1} & \cdots & \rho_{K-1,m}^{1-P} \end{bmatrix}$$

$$\underbrace{\qquad\qquad}_{\mathbf{E}[m]}$$

Eq. (26)

where $\rho_{k,m} = a_{opt,m} e^{\frac{j2\pi k}{K}}$ . In the sequel, the index m is omitted.

The receiver device 100 may further obtain the second matrix T 702. For example, the receiver device 100 may obtain $\tilde{T}$ = E H M. and T = $\tilde{T}$ - diag($\tilde{T}$) that may represent the ISI in the frequency domain.

Moreover, the receiver device 100 may have a one-tap equalizer unit that may perform the one-tap equalization by apply the diagonal matrix 703 given on the demodulated signal 121 or on a remainder of the demodulated signal obtained after removing a contribution of the first ISI from estimated symbols in the previous PIC iteration, and obtain the symbols based on removing the contribution of the estimated first ISI in the current PIC iteration, from the estimated symbols.

The one-tap equalization is given by:

$$\tilde{y}_l = D_e^{-1} y^{(l)} \qquad\qquad \text{Eq. (27)}$$

where the diagonal matrix 703 $D_e$ = diag($\tilde{T}$) and the suffix $.^{(l)}$ is for the l-th PIC iteration with $y^{(0)}$ = y.

Furthermore, the receiver device 100 may perform a post-equalization using a Vandermonde matrix 704 M and may further obtain a time-domain signal $\tilde{x}_l$ as follows:

$$\tilde{x}_l = M \tilde{y}_l = \underbrace{M D_e^{-1} E H}_{\text{ISI}} s + M D_e^{-1} E \eta \qquad\qquad \text{Eq. (28)}$$

where the matrix M $D_e^{-1}$ E H, representing the ISI, and reduces to the identity in the absence of time selectivity (time-invariant channels).

Moreover, as discussed, the first iterative procedure comprises the set of PIC iterations. Each PIC iteration may remove (in the frequency domain) the contribution of the ISI from y given by:

$$y^{(l+1)} = \qquad y \qquad - T V \hat{s}^{(l)} \qquad\qquad \text{Eq. (29)}$$

where the first matrix 701 is V = E(: ,1: K) given by the first K columns of the matrix E 706 (e.g., determined by the demodulator unit 114). For example, the receiver device 100 may further comprise a post-equalization block 707 that may perform a post-equalization by using the second Vandermonde matrix M 704, and may further obtain $\tilde{x}_l$. The output of the post-equalization $\tilde{x}_l$ goes through a hard decision unit 705 in order to obtain a hard decision (e.g., the obtained symbol 130) according to $\hat{s}^{(l)} = \pi(\tilde{x}_l)$. The output value of the hard decision unit 705, should be the same among the symbols of the used constellation (for example, the QPSK symbols).

The receiver device 100 performs the first iterative procedure until a converging of the set of PIC iterations meets a predefined criterion. For example, the tentative detector may continue reiterating until converging.

Reference is made to FIG. 8, which depicts a diagram 800 illustrating performing a first iterative procedure comprising a set of PIC iterations followed by a second iterative procedure comprising a set of ICR iterations.

For example, the receiver device 100 may obtain symbols 130 based on performing the first iterative procedure comprising a set of PIC iterations, and further performing a second iterative procedure comprising a set of ICR iterations. As can be derived from FIG. 8, the obtained symbols 130, i.e. the output of the first iterative procedure indicated by $\hat{s}_1$ in FIG. 8, are fed to the second iterative procedure comprising the set of ICR iterations.

Moreover, the receiver device 200 may obtain symbols 230 based on performing the iterative procedure comprising the set of ICR iterations, e.g., as discussed above with respect to FIG. 2.

17

During the second iterative procedure (the interference cancellation refinement), the receiver device 100 or the receiver device 200 obtains a cancelation filter 801.

For example, the cancelation filter 801 may be a canceller filter G that may be given by:

$$G = H^H H - \text{diag}(H^H H) \qquad \text{Eq. (30)}$$

Furthermore, the iterative procedure comprises the set of ICR iterations in which, during each ICR iteration, $\tilde{r}^{(l)}$ is input to a one-tap time-domain equalizer block 813 as follows:

$$\tilde{r}^{(l)} = H^H r - G \hat{s}_1^{(l)} \qquad \text{Eq. (31)}$$

where $\hat{s}_1^{(0)} = \hat{s}_1$ is the output of the first iterative procedure (i.e., the tentative decision). In other words, a refinement of the equalization made by PIC during the first iterative procedure will be carried out. Furthermore, in one-tap time-domain equalizer block 813, the inversion of the diagonal matrix 803 ($D_h^{-1}$) may be applied on the filtered received signal $\tilde{r}^{(l)}$, The output of the one-tap time domain equalizer block 813 is a soft decision indicated by $\tilde{z}_l$ and may be obtained based on

$\tilde{z}_l = D_h^{-1} \tilde{r}^{(l-1)}$, where $D_h^{-1} = \text{diag}(H^H H)^{-1}$.

Next, the soft decision $\tilde{z}_l$ that is output by the one-tap time-domain equalizer block 813 goes to the hard decision block 804, providing a hard decision (i.e., the obtained symbol 130 for the device 100 or the obtained symbol 230 for the device 200), according to:

$$\hat{s}_1^{(l)} = \pi(\tilde{z}_l) \qquad \text{Eq. (32)}$$

In the diagram illustrated in FIG. 8, the $H^H$ 802 is the matched filter.

The receiver device 100 or the receiver device 200 may perform the second iterative procedure until a converging of the set of ICR iterations meets a predefined criterion. For example, the ICR may continue reiterating until converging and the and the resulting SC-LVDM symbol 230 is given by $\tilde{s} = \pi(\tilde{z}_{l_{max}})$.

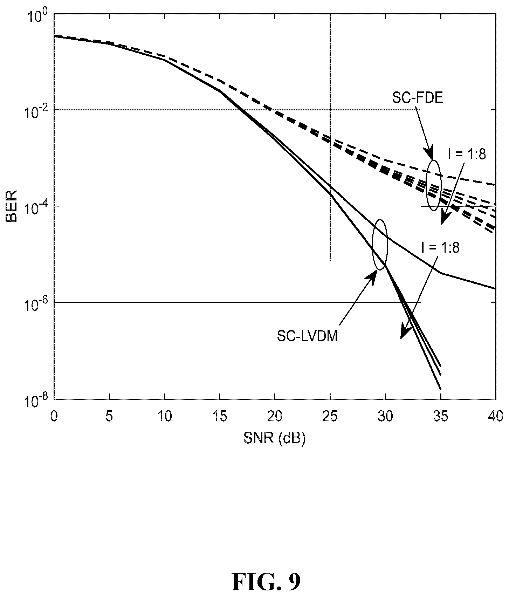

Reference is now made to FIG. 9, FIG. 10, FIG. 11, FIG. 12, FIG. 13, FIG. 14A, and FIG. 14B, which depict respective diagrams illustrating performance results of the proposed receiver devices 100, 200 in a doubly selective channel. A comparison will be carried out, and the performance and/or the complexity tradeoff will be discussed. Moreover, the sensitivity of the performance and the optimized radius $a_{opt}$ to the channel estimation errors are presented, in which the complexities are generally known to the skilled person.

## 1. Doubly Selective Fading Channels

For example, $K = 64$ and $L = 16$ may be set. Moreover, the maximum Doppler spread is set to $f_D = 1$ KHz while the subcarrier spacing is set to $\Delta f = 30$ KHz and 15 KHz in FIG. 9, FIG. 10 and FIG. 11, respectively. Further, the quadratic phase-shift keying (QPSK) modulation is considered.

With respect to FIG. 9, for example, when the receiver device 100 performs the first iterative procedure (only the set of PIC iterations). As can be derived from FIG. 9, the SC-LVDM obtained by the receiver device 100 outperforms SC-FDE by 10 dB at BER = $10^{-4}$.

Furthermore, it can be derived that the PIC converges within 2 iterations with SC-LVDM, while it needs 8 iterations to converge for SC-FDE. Moreover, the overall complexity of PIC is $O(2IK^2)$, where $I$ is the number of iterations.

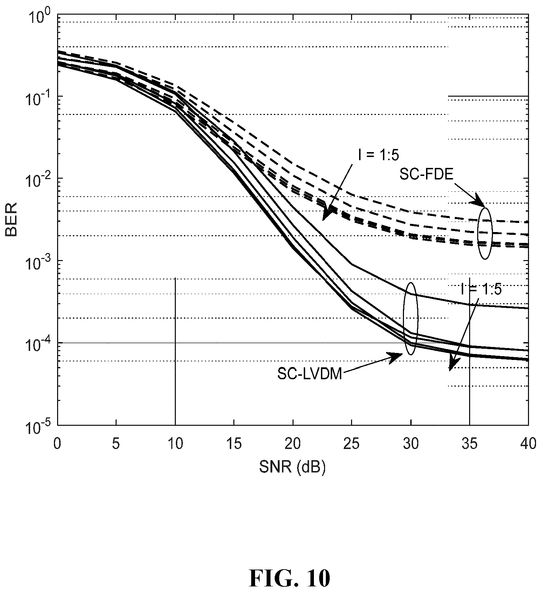

FIG. 10 shows the performance results when only the iterative procedure comprising the set of ICR iterations is performed.

In particular, a received signal 120 is demodulated by the first Vandermonde matrix E 706, afterwards, a one-tap equalization is performed at one-tap equalizer block 703. At next, a post-equalization is made at block 705. Furthermore, a first hard decision is made and the obtained symbol 130 went directly through the ICR processing, i.e., without undergoing a set of PIC iterations. As can be derived from FIG. 10, when using the second iterative procedure only with the conventional SC-LVDM and SC-FDE schemes (no PIC iterations in Stage 1), the performance is saturated as it is depicted in FIG. 10. Furthermore, the second iterative procedure converges within 3 iterations for both schemes, SC-LVDM and SC-FDE, while it brings performance enhancement in low signal to noise ratios (SNRs). Here, the complexity order is $O((1 + 4L)IK)$, where $I$ is the number of iterations in the second iterative procedure and L is the channel delay spread.

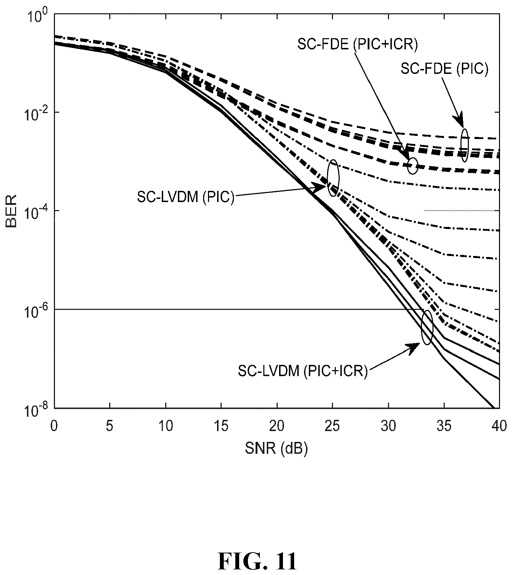

With respect to FIG. 11, the performance results are provided for the SC-LVDM and the SC-FDE. In this case, at first, the iterative procedure comprising the set of PIC iterations is performed on the demodulated signal 121. Moreover, the first result of hard decision is the obtained symbol 130 (i.e., the output of PIC processing). At next, the obtained symbol 130 undergone the second iterative procedure comprising the set of ICR iterations, for refinement and the symbols 230 are obtained.

As can be derived from the diagram illustrated in FIG. 11, the SC-LVDM outperforms SC-FDE when using the proposed scheme which converges faster than when using PIC only. Furthermore, the second iterative procedure (the set of ICR iterations) provides performance enhancement in low SNR range while the first iterative procedure (the set of PIC iterations) relaxes the performance saturation that the second iterative procedure (the set of ICR iterations) would bring (see FIG. 10), if it would be applied alone. Thus, performing the first iterative procedure and the second iterative procedure together may enable the proposed scheme stronger than performing either the first iterative procedure alone or the second iterative procedure alone.

Next, simulation results in the third-generation partnership project (3GPP) channels are provided.

## 2. 3GPP Channels

For example, $K = 64$ is set. Further, the carrier frequency $f_c = 3.5$ GHz, the velocity is $v = 200$ Km/h, Doppler spread is $f_D = 648$ Hz, and subcarriers spacing $\Delta f = 30$ KHz. Further, the QPSK modulation is considered.

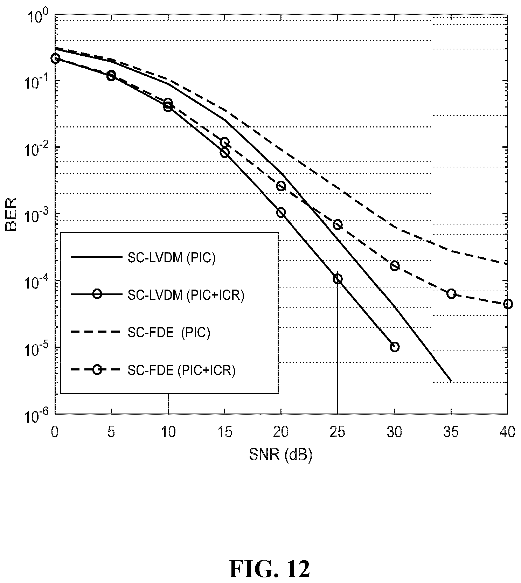

The performance results of SC-LVDM and SC-FDE in 3GPP ETU channels, using $L = 10$, are shown in FIG. 12. Moreover, it can be derived that the SC-LVDM outperforms the SC-FDE when using the proposed receiver devices in Extended Typical Urban (ETU) channels. Therein, the first iterative procedure uses 3 and 6 iterations for SC-LVDM and SC-FDE, respectively, while the second iterative procedure uses 3 iterations for both. Moreover, the second iterative procedure provides a performance enhancement of 3 dB for SC-LVDM, and a gain of 5 dB for SC-FDE.

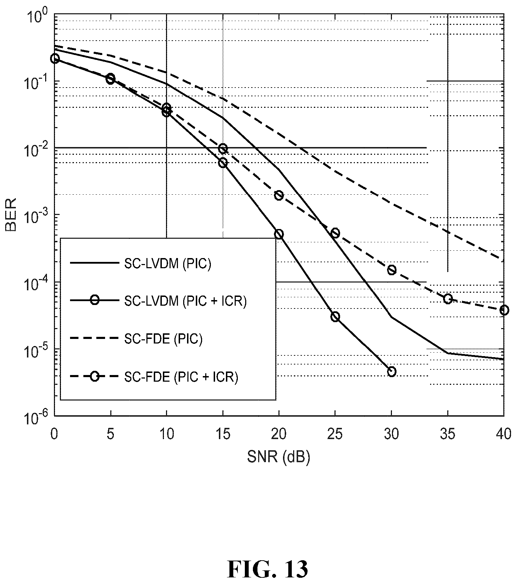

The performance results of SC-LVDM and SC-FDE in 3GPP EVB channels, using $L = 39$, are shown in FIG. 13. Moreover, it can be derived that the SC-LVDM performs well in Extended Vehicular B (EVB) channels where the second iterative procedure of the proposed receiver devices brings 5 dB. Here, the SC-LVDM outperforms the SC-FDE.

In FIG. 9, FIG. 10, FIG. 11, FIG. 12 and FIG. 13, the performance result are obtained by using perfect CSI at the receiver devices 100 or 200. The perfect CSI may represent a realistic CSI, as it is generally known. For example, considering that the receiver devices need to know the channel, in order to perform the equalization, and consequently, detect the transmitted symbols. In these cases, it is assumed that the receiver devices know the channel, perfectly.

Next, the performance results are shown using the CE algorithm, for obtaining the CSI, according to Eq. (11) to Eq. (24), as discussed above.

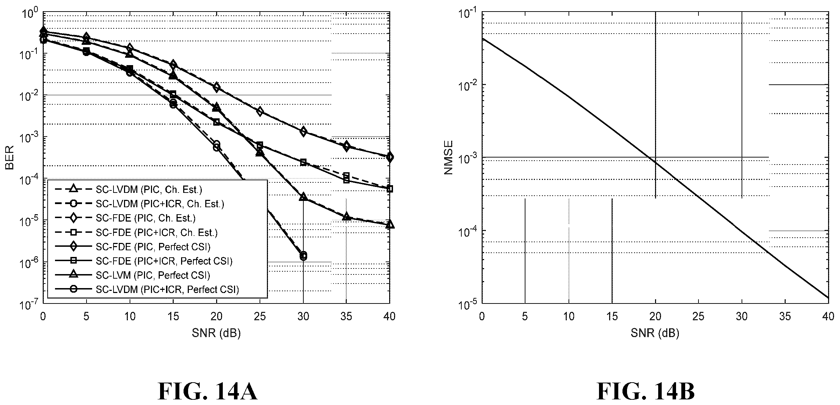

Moreover, the robustness is shown for the channel estimation algorithm. In FIG. 14B, the Normalized Mean Square Error (NMSE) is shown for the assessment of channel estimation. The direct impact is two-fold, for example, the estimated channel should be used to determine optimized radius of the circle, and, moreover, the optimized radius of the circle should be used for building the blocks of the receiver device (for detection of symbols), as described above.

Without limiting the present disclosure, in FIG. 14A and FIG. 14B, the performances are shown for the SC-LVDM and the SC-FDE in EVB channels. In FIG. 14A and 14B, the sensitivity to the channel and $a_{opt}$ in 3GPP EVB channels is obtained using $L = 39$.

The pilot vectors have been arranged as it was discussed with respect to FIG. 6, where $NP = 6$ and $D = 5$. FIG. 14A shows that the proposed channel estimation algorithm performs well. Further, the normalized MSE (NMSE) of $a_{opt}$ estimation is depicted in FIG. 14B. Therefore, it may be derived that the proposed advanced receiver devices remain robust and the SC-LVDM outperforms the SC-FDE in 3GPP EVB channels, when using either perfect or imperfect CSI.

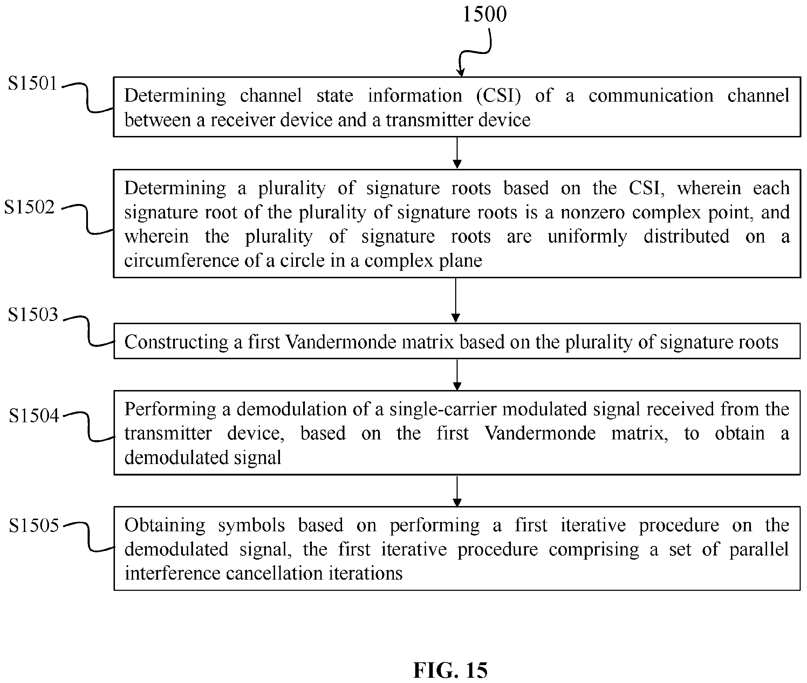

FIG. 15 shows a method 1500 according to an embodiment of the present disclosure for a receiver device 100 for single-carrier modulation. The method 1500 may be carried out by the receiver device 100 or the receiver device 200 as described above. Without limiting the present disclosure, in the following, the method 1500 is exemplarily discussed as a method being performed by the receiver device 100.

The method 1500 comprises a step S1501 of determining CSI 101 of a communication channel 111 between the receiver device 100 and a transmitter device 110.

The method 1500 further comprises a step S1502 of determining a plurality of signature roots based on the CSI 101, wherein each signature root of the plurality of signature roots is a nonzero complex point, and wherein the plurality of signature roots are uniformly distributed on a circumference of a circle in a complex plane.

The method 1500 further comprises a step S1503 of constructing a first Vandermonde matrix based on the plurality of signature roots.

The method 1500 further comprises a step S1504 of performing a demodulation of a single-carrier modulated signal 120 received from the transmitter device 110, based on the first Vandermonde matrix, to obtain a demodulated signal 121.

The method 1500 further comprises a step S1505 of obtaining symbols 130 based on performing a first iterative procedure on the demodulated signal 121, the first iterative procedure comprising a set of PIC iterations.

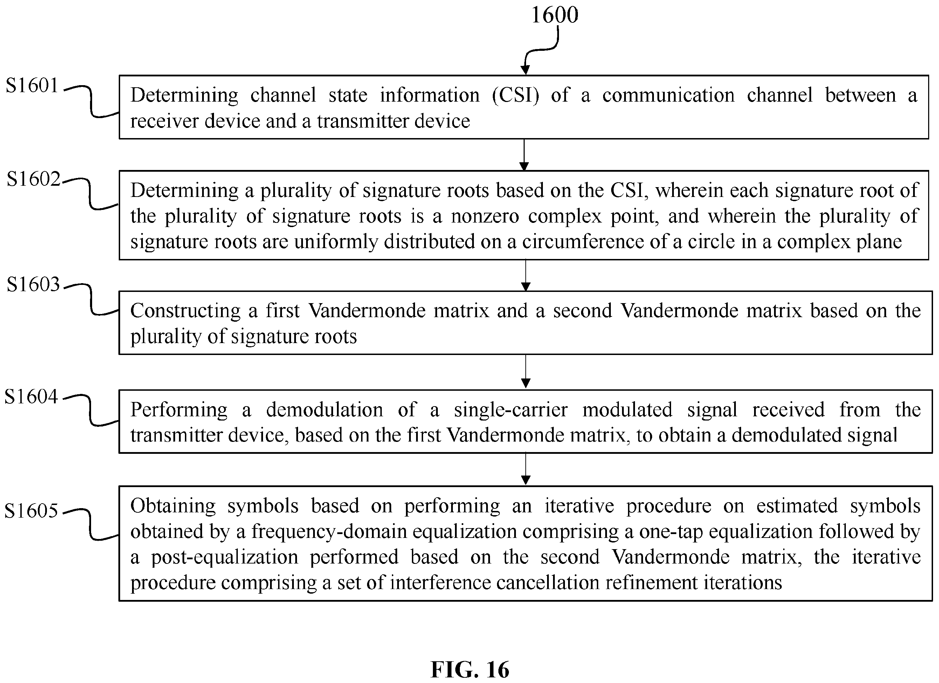

FIG. 16 shows a method 1600 according to an embodiment of the present disclosure for a receiver device 200 for single-carrier modulation. The method 1600 may be carried out by the receiver device 100 or the receiver device 200 as described above. Without limiting the present disclosure, in the following, the method 1600 is exemplarily discussed as a method being performed by the receiver device 200.

The method 1600 comprises a step S1601 of determining CSI 201 of a communication channel 111 between the receiver device 200 and a transmitter device 110.

The method 1600 further comprises a step S1602 of determining a plurality of signature roots based on the CSI 201, wherein each signature root of the plurality of signature roots is a nonzero complex point, and wherein the plurality of signature roots are uniformly distributed on a circumference of a circle in a complex plane.

The method 1600 further comprises a step S1603 of constructing a first Vandermonde matrix and a second Vandermonde matrix based on the plurality of signature roots.

The method 1600 further comprises a step S1604 of performing a demodulation of a single-carrier modulated signal 220 received from the transmitter device 110, based on the first Vandermonde matrix, to obtain a demodulated signal 221.

The method 1600 further comprises a step S1605 of obtaining symbols 230 based on performing an iterative procedure on estimated symbols obtained by a frequency-domain equalization comprising a one-tap equalization followed by a post-equalization performed based on the second Vandermonde matrix, the iterative procedure comprising a set of interference cancellation refinement, ICR, iterations.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1.    A receiver device (100) for single-carrier modulation, the receiver device (100) being configured to:

determine Channel State Information, CSI, (101) of a communication channel (111) between the receiver device (100) and a transmitter device (110);
determine a plurality of signature roots based on the CSI (101), wherein each signature root of the plurality of signature roots is a nonzero complex point, and wherein the plurality of signature roots are uniformly distributed on a circumference of a circle in a complex plane;
construct a first Vandermonde matrix (706) based on the plurality of signature roots;
perform a demodulation of a single-carrier modulated signal (120) received from the transmitter device (110), based on the first Vandermonde matrix (706), to obtain a demodulated signal (121); and
obtain symbols (130) based on performing a first iterative procedure on the demodulated signal (121), the first iterative procedure comprising a set of parallel interference cancellation, PIC, iterations,
wherein, for each PIC iteration, estimated symbols are obtained after the PIC iteration, and the receiver device (100) is configured to:

construct a second Vandermonde matrix (704) based on the plurality of signature roots;
obtain a first matrix (701) based on the first Vandermonde matrix (706);
obtain a second matrix (702) based on the first and the second Vandermonde matrices (706, 704) to estimate a first inter-symbol interference, ISI, in a current PIC iteration;
perform a one-tap equalization by applying a diagonal matrix (703) obtained based on the first and the second Vandermonde matrices (706, 704) and an estimated channel matrix on the demodulated signal (121) or on a remainder of the demodulated signal (121) obtained after removing a contribution of the estimated first ISI from estimated symbols in a previous PIC iteration; and
obtain the symbols (130) based on removing the contribution of the estimated first ISI in the current PIC iteration from the estimated symbols of the previous PIC iteration,
wherein the symbols (130) are further obtained based on performing a second iterative procedure on the obtained symbols output from the first iterative procedure, the second iterative procedure comprising a set of interference cancellation refinement, ICR, iterations,
wherein the receiver device (100) is further configured to obtain a cancelation filter (801) based on the estimated channel matrix or the determined CSI (101) of the communication channel (111),
wherein, for each ICR iteration, the receiver device (100) is further configured to:

apply the cancelation filter (801) on the output of the first iterative procedure or an output of a previous ICR iteration to estimate a second ISI; and
obtain the symbols (230) based on applying an inversion of a diagonal matrix (803) on a filtered received signal after removing a contribution of the estimated second ISI, wherein the filtered received signal is the received single-carrier modulated signal (120) filtered by a filter $H^H$, wherein H is the estimated channel matrix,
wherein the cancelation filter (801) is given by $H^H H - \text{diag}(H^H H)$, and the diagonal matrix (803) is $\text{diag}(H^H H)$.

2. The receiver device (100) according to claim 1, wherein the receiver device (100) is configured to, during each PIC iteration, apply the first matrix (701) and the second matrix (702) respectively on the estimated symbols of the previous PIC iteration, wherein the first matrix (701) is applied for performing a frequency-domain transformation of the estimated symbols of the previous PIC iteration, and wherein the second matrix (702) is applied for estimating the first ISI of transformed symbols in the frequency domain.

3. The receiver device (100) according to claim 1 or 2, wherein the first iterative procedure is performed until a converging of the set of PIC iterations meets a predefined criterion.

4. The receiver device (100) according to any one of the claims 1 to 3, wherein, during each subsequent ICR iteration, the cancelation filter (801) is applied on the obtained symbols (130) output from a previous ICR iteration to estimate the second ISI.

5. The receiver device (100) according to any one of the claims 1 to 4, wherein the second iterative procedure is performed until a converging of the set of ICR iterations meets a predefined criterion.

6. A receiver device (200) for single-carrier modulation, the receiver device (200) being configured to:

determine Channel State Information, CSI, (201) of a communication channel (111) between the receiver device (200) and a transmitter device (110);
determine a plurality of signature roots based on the CSI (201), wherein each signature root of the plurality of signature roots is a nonzero complex point, and wherein the plurality of signature roots are uniformly distributed on a circumference of a circle in a complex plane;
construct a first Vandermonde matrix (706) and a second Vandermonde matrix (704) based on the plurality of signature roots;
perform a demodulation of a single-carrier modulated signal (120) received from the transmitter device (110), based on the first Vandermonde matrix (706), to obtain a demodulated signal (221); and
obtain symbols (230) based on performing an iterative procedure on estimated symbols obtained by a frequency-domain equalization comprising a one-tap equalization followed by a post-equalization performed based on the second Vandermonde matrix (704), the iterative procedure comprising a set of interference cancellation refinement, ICR, iterations,
wherein the receiver device (200) is further configured to obtain a cancelation filter (801) based on the determined CSI (201) of the communication channel (111),
wherein, for each ICR iteration, the receiver device (200) is further configured to:

apply the cancelation filter (801) on the estimated symbols during the first iteration or on an output of a previous ICR iteration to estimate a second ISI; and
obtain the symbols (230) based on applying an inversion of a diagonal matrix (803) on a filtered received signal after removing a contribution of the estimated second ISI, wherein the filtered received signal is the received single-carrier modulated signal (120) filtered by a filter $H^H$, wherein H is the estimated channel matrix,
wherein the cancelation filter (801) is given by $H^H H - \text{diag}(H^H H)$, and the diagonal matrix (803) is $\text{diag}(H^H H)$.

7. The receiver device (200) according to claim 6, wherein, during each subsequent ICR iteration, the cancelation filter (801) is applied on the symbols obtained from a previous ICR iteration to estimate the second ISI.

8. The receiver device (200) according to claim 6 or 7, wherein the iterative procedure is performed until a converging of the set of ICR iterations meets a predefined criterion.

9. The receiver device (100, 200) according to any one of the claims 1 to 8, further configured to compute a metric for at least one of determining a radius of the circle in the complex plane and evaluating the plurality of signature roots, based on the CSI (201) of the communication channel (111).

10. The receiver device (100, 200) according to any one of the claims 1 to 9, further configured to modify individually a signature root from the plurality of signature roots based on a machine learning algorithm, in particular a gradient descent algorithm.

11. The receiver device (100, 200) according to claim 10, further configured to perform the demodulation of the single-carrier modulated signal (120) based on the individually modified signature root.

12. A system (300) for single-carrier modulation, the system (300) comprising:

a transmitter device (110) configured to generate a single-carrier modulated signal based on constructing a Lagrange matrix or a Vandermonde matrix; and
a receiver device (100, 200) according to any one of the claims 1 to 11.

13. A method (1500) for a receiver device (100) for single-carrier modulation, wherein the method comprises:

determining (S1501) Channel State Information, CSI, (101) of a communication channel (111) between the receiver device (100) and a transmitter device (110);
determining (S1502) a plurality of signature roots based on the CSI (101), wherein each signature root of the plurality of signature roots is a nonzero complex point, and wherein the plurality of signature roots are uniformly distributed on a circumference of a circle in a complex plane;
constructing (S1503) a first Vandermonde matrix (706) based on the plurality of signature roots;
performing (S1504) a demodulation of a single-carrier modulated signal (120) received from the transmitter device (110), based on the first Vandermonde matrix (706), to obtain a demodulated signal (121); and
obtaining (S1505) symbols (130) based on performing a first iterative procedure on the demodulated signal (121), the first iterative procedure comprising a set of parallel interference cancellation, PIC, iterations, wherein, for each PIC iteration, estimated symbols are obtained after the PIC iteration, and the method further comprises:

constructing a second Vandermonde matrix (704) based on the plurality of signature roots;
obtaining a first matrix (701) based on the first Vandermonde matrix (706);
obtaining a second matrix (702) based on the first and the second Vandermonde matrices (706, 704) to estimate a first inter-symbol interference, ISI, in a current PIC iteration;
performing a one-tap equalization by applying a diagonal matrix (703) obtained based on the first and the second Vandermonde matrices (706, 704) and an estimated channel matrix on the demodulated signal (121) or on a remainder of the demodulated signal (121) obtained after removing a contribution of the estimated first ISI from estimated symbols in a previous PIC iteration; and
obtaining the symbols (130) based on removing the contribution of the estimated first ISI in the current PIC iteration from the estimated symbols of the previous PIC iteration,
wherein the symbols (130) are further obtained based on performing a second iterative procedure on the obtained symbols output from the first iterative procedure, the second iterative procedure comprising a set of interference cancellation refinement, ICR, iterations,
wherein the method further comprises obtaining a cancelation filter (801) based on the estimated channel matrix or the determined CSI (101) of the communication channel (111),
wherein, for each ICR iteration, the method further comprises:

applying the cancelation filter (801) on the output of the first iterative procedure or an output of a previous ICR iteration to estimate a second ISI; and
obtaining the symbols (230) based on applying an inversion of a diagonal matrix (803) on a filtered received signal after removing a contribution of the estimated second ISI, wherein the filtered received signal is the received single-carrier modulated signal (120) filtered by a filter $H^H$, wherein H is the estimated channel matrix,

wherein the cancelation filter (801) is given by $H^H H$ - diag($H^H H$), and the diagonal matrix (803) is diag($H^H H$).

14. A method (1600) for a receiver device (200) for single-carrier modulation, wherein the method (1600) comprises:

determining (S1601) Channel State Information, CSI, (201) of a communication channel (111) between the receiver device (200) and a transmitter device (110);

determining (S1602) a plurality of signature roots based on the CSI (201), wherein each signature root of the plurality of signature roots is a nonzero complex point, and wherein the plurality of signature roots are uniformly distributed on a circumference of a circle in a complex plane;

constructing (S1603) a first Vandermonde matrix (706) and a second Vandermonde matrix (704) based on the plurality of signature roots;

performing (S1604) a demodulation of a single-carrier modulated signal (120) received from the transmitter device (110), based on the first Vandermonde matrix (706), to obtain a demodulated signal (221); and

obtaining (S1605) symbols (230) based on performing an iterative procedure on estimated symbols obtained by a frequency-domain equalization comprising a one-tap equalization followed by a post-equalization performed based on the second Vandermonde matrix (704), the iterative procedure comprising a set of interference cancellation refinement, ICR, iterations,

wherein the method further comprises obtaining a cancelation filter (801) based on the determined CSI (201) of the communication channel (111),

wherein, for each ICR iteration, the method further comprises:

applying the cancelation filter (801) on the estimated symbols during the first iteration or on an output of a previous ICR iteration to estimate a second ISI; and

obtaining the symbols (230) based on applying an inversion of a diagonal matrix (803) on a filtered received signal after removing a contribution of the estimated second ISI, wherein the filtered received signal is the received single-carrier modulated signal (120) filtered by a filter $H^H$, wherein H is the estimated channel matrix,

wherein the cancelation filter (801) is given by $H^H H$ - diag($H^H H$), and the diagonal matrix (803) is diag($H^H H$).

15. A computer program comprising instructions which, when the program is executed by a computer, causes the computer to carry out the method (1500) of claim 13 or the method (1600) of claim 14.

## Patentansprüche

1. Empfängervorrichtung (100) für eine Einzelträgermodulation, wobei die Empfängervorrichtung (100) konfiguriert ist zum:

Bestimmen von Kanalzustandsinformationen (CSI) (101) eines Kommunikationskanals (111) zwischen der Empfängervorrichtung (100) und einer Sendervorrichtung (110);

Bestimmen einer Vielzahl von Signaturwurzeln basierend auf den CSI (101), wobei jede Signaturwurzel der Vielzahl von Signaturwurzeln ein komplexer Punkt ungleich null ist und wobei die Vielzahl von Signaturwurzeln auf einem Umfang eines Kreises in einer komplexen Ebene gleichmäßig verteilt sind;

Konstruieren einer ersten Vandermonde-Matrix (706) basierend auf der Vielzahl von Signaturwurzeln;

Durchführen einer Demodulation eines einzelträgermodulierten Signals (120), das von der Sendervorrichtung (110) empfangen wird, basierend auf der ersten Vandermonde-Matrix (706), um ein demoduliertes Signal (121) zu erhalten; und

Erhalten von Symbolen (130) basierend auf dem Durchführen einer ersten iterativen Prozedur auf dem demodulierten Signal (121), wobei die erste iterative Prozedur einen Satz von parallelen Interferenzunterdrückungs(PIC)-Iterationen umfasst, wobei, für jede PIC-Iteration, geschätzte Symbole nach der PIC-Iteration erhalten werden und die Empfängervorrichtung (100) konfiguriert ist zum:

Konstruieren einer zweiten Vandermonde-Matrix (704) basierend auf der Vielzahl von Signaturwurzeln;

Erhalten einer ersten Matrix (701) basierend auf der ersten Vandermonde-Matrix (706);

Erhalten einer zweiten Matrix (702) basierend auf der ersten und der zweiten Vandermonde-Matrix (706, 704), um eine erste Intersymbolinterferenz (ISI) in einer aktuellen PIC-Iteration zu schätzen;

Durchführen einer Entzerrung mit einem Abgriff durch Anwenden einer Diagonalmatrix (703), die basierend

EP 4 154 486 B1

auf der ersten und der zweiten Vandermonde-Matrix (706, 704) erhalten wird, und einer geschätzten Kanalmatrix auf das demodulierte Signal (121) oder auf einen Rest des demodulierten Signals (121), der nach einem Entfernen eines Beitrags der geschätzten ersten ISI aus geschätzten Symbolen in einer vorherigen PIC-Iteration erhalten wird; und

Erhalten der Symbole (130) basierend auf dem Entfernen des Beitrags der geschätzten ersten ISI in der aktuellen PIC-Iteration aus den geschätzten Symbolen der vorherigen PIC-Iteration,

wobei die Symbole (130) ferner basierend auf dem Durchführen einer zweiten iterativen Prozedur auf den erhaltenen Symbolen, die aus der ersten iterativen Prozedur ausgegeben wurden, erhalten werden, wobei die zweite iterative Prozedur einen Satz von Interferenzunterdrückungsverfeinerungs(ICR)-Iterationen umfasst,

wobei die Empfängervorrichtung (100) ferner konfiguriert ist, um einen Unterdrückungsfilter (801) basierend auf der geschätzten Kanalmatrix oder den bestimmten CSI (101) des Kommunikationskanals (111) zu erhalten, wobei, für jede ICR-Iteration, die Empfängervorrichtung (100) ferner konfiguriert ist zum:

Anwenden des Unterdrückungsfilters (801) auf die Ausgabe der ersten iterativen Prozedur oder eine Ausgabe einer vorherigen ICR-Iteration, um eine zweite ISI zu schätzen; und

Erhalten der Symbole (230) basierend auf dem Anwenden einer Inversion einer Diagonalmatrix (803) auf ein gefiltertes empfangenes Signal nach dem Entfernen eines Beitrags der geschätzten zweiten ISI, wobei das gefilterte empfangene Signal das empfangene einzelträgermodulierte Signal (120), das durch einen Filter $H^H$ gefiltert wurde, ist, wobei H die geschätzte Kanalmatrix ist,

wobei der Unterdrückungsfilter (801) durch $H^H H - \text{diag}(H^H H)$ gegeben ist und die Diagonalmatrix (803) $\text{diag}(H^H H)$ ist.

2. Empfängervorrichtung (100) nach Anspruch 1, wobei die Empfängervorrichtung (100) konfiguriert ist, um, während jeder PIC-Iteration, die erste Matrix (701) beziehungsweise die zweite Matrix (702) auf die geschätzten Symbole der vorherigen PIC-Iteration anzuwenden, wobei die erste Matrix (701) zum Durchführen einer Frequenzbereichstransformation der geschätzten Symbole der vorherigen PIC-Iteration angewendet wird und wobei die zweite Matrix (702) zum Schätzen der ersten ISI von transformierten Symbolen in dem Frequenzbereich angewendet wird.

3. Empfängervorrichtung (100) nach Anspruch 1 oder 2, wobei die erste iterative Prozedur durchgeführt wird, bis ein Konvergieren des Satzes von PIC-Iterationen ein vordefiniertes Kriterium erfüllt.

4. Empfängervorrichtung (100) nach einem der Ansprüche 1 bis 3, wobei, während jeder nachfolgenden ICR-Iteration, der Unterdrückungsfilter (801) auf die erhaltenen Symbole (130), die aus einer vorherigen ICR-Iteration ausgegeben wurden, angewendet wird, um die zweite ISI zu schätzen.

5. Empfängervorrichtung (100) nach einem der Ansprüche 1 bis 4, wobei die zweite iterative Prozedur durchgeführt wird, bis ein Konvergieren des Satzes von ICR-Iterationen ein vordefiniertes Kriterium erfüllt.

6. Empfängervorrichtung (200) für die Einzelträgermodulation, wobei die Empfängervorrichtung (200) konfiguriert ist zum:

Bestimmen von Kanalzustandsinformationen (CSI) (201) eines Kommunikationskanals (111) zwischen der Empfängervorrichtung (200) und einer Sendervorrichtung (110);

Bestimmen einer Vielzahl von Signaturwurzeln basierend auf den CSI (201), wobei jede Signaturwurzel der Vielzahl von Signaturwurzeln ein komplexer Punkt ungleich null ist und wobei die Vielzahl von Signaturwurzeln auf einem Umfang eines Kreises in einer komplexen Ebene gleichmäßig verteilt sind;

Konstruieren einer ersten Vandermonde-Matrix (706) und einer zweiten Vandermonde-Matrix (704) basierend auf der Vielzahl von Signaturwurzeln;

Durchführen einer Demodulation eines einzelträgermodulierten Signals (120), das von der Sendervorrichtung (110) empfangen wird, basierend auf der ersten Vandermonde-Matrix (706), um ein demoduliertes Signal (221) zu erhalten; und

Erhalten von Symbolen (230) basierend auf dem Durchführen einer iterativen Prozedur auf geschätzten Symbolen, die durch eine Frequenzbereichsentzerrung erhalten werden, die eine Entzerrung mit einem Abgriff gefolgt durch eine Nachentzerrung, die basierend auf der zweiten Vandermonde-Matrix (704) durchgeführt wird, umfasst,

wobei die iterative Prozedur einen Satz von Interferenzunterdrückungsverfeinerungs(ICR)-Iterationen umfasst,

wobei die Empfängervorrichtung (200) ferner konfiguriert ist, um einen Unterdrückungsfilter (801) basierend auf

24

EP 4 154 486 B1

den bestimmten CSI (201) des Kommunikationskanals (111) zu erhalten,
wobei, für jede ICR-Iteration, die Empfängervorrichtung (200) ferner konfiguriert ist zum:

Anwenden des Unterdrückungsfilters (801) auf die geschätzten Symbole während der ersten Iteration oder auf eine Ausgabe einer vorherigen ICR-Iteration, um eine zweite ISI zu schätzen; und
Erhalten der Symbole (230) basierend auf dem Anwenden einer Inversion einer Diagonalmatrix (803) auf ein gefiltertes empfangenes Signal nach dem Entfernen eines Beitrags der geschätzten zweiten ISI, wobei das gefilterte empfangene Signal das empfangene einzelträgermodulierte Signal (120), das durch einen Filter $H^H$ gefiltert wurde, ist, wobei H die geschätzte Kanalmatrix ist,
wobei der Unterdrückungsfilter (801) durch $H^H H - diag(H^H H)$ gegeben ist und die Diagonalmatrix (803) $diag(H^H H)$ ist.

7. Empfängervorrichtung (200) nach Anspruch 6, wobei, während jeder nachfolgenden ICR-Iteration, der Unterdrückungsfilter (801) auf die Symbole, die aus einer vorherigen ICR-Iteration erhalten wurden, angewendet wird, um den zweiten ISI zu schätzen.

8. Empfängervorrichtung (200) nach Anspruch 6 oder 7, wobei das iterative Verfahren durchgeführt wird, bis ein Konvergieren des Satzes von ICR-Iterationen ein vordefiniertes Kriterium erfüllt.

9. Empfängervorrichtung (100, 200) nach einem der Ansprüche 1 bis 8, die ferner konfiguriert ist, um eine Metrik für mindestens eines von dem Bestimmen eines Radius des Kreises in der komplexen Ebene und einem Auswerten der Vielzahl von Signaturwurzeln, basierend auf den CSI (201) des Kommunikationskanals (111), zu berechnen.

10. Empfängervorrichtung (100, 200) nach einem der Ansprüche 1 bis 9, die ferner konfiguriert ist, um eine Signaturwurzel aus der Vielzahl von Signaturwurzeln basierend auf einem Maschinenlernalgorithmus, insbesondere einem Gradientenabstiegsalgorithmus, individuell zu modifizieren.

11. Empfängervorrichtung (100, 200) nach Anspruch 10, die ferner konfiguriert ist, um die Demodulation des einzelträgermodulierten Signals (120) basierend auf der individuell modifizierten Signaturwurzel durchzuführen.

12. System (300) für die Einzelträgermodulation, wobei das System (300) umfasst:

eine Sendervorrichtung (110), die konfiguriert ist, um ein einzelträgermoduliertes Signal basierend auf dem Konstruieren einer Lagrange-Matrix oder einer Vandermonde-Matrix zu erzeugen; und
eine Empfängervorrichtung (100, 200) nach einem der Ansprüche 1 bis 11.

13. Verfahren (1500) für eine Empfängervorrichtung (100) für die Einzelträgermodulation, wobei das Verfahren umfasst:

Bestimmen (S1501) von Kanalzustandsinformationen (CSI) (101) eines Kommunikationskanals (111) zwischen der Empfängervorrichtung (100) und einer Sendervorrichtung (110);
Bestimmen (S1502) einer Vielzahl von Signaturwurzeln basierend auf den CSI (101), wobei jede Signaturwurzel der Vielzahl von Signaturwurzeln ein komplexer Punkt ungleich null ist und wobei die Vielzahl von Signaturwurzeln auf einem Umfang eines Kreises in einer komplexen Ebene gleichmäßig verteilt sind;
Konstruieren (S1503) einer ersten Vandermonde-Matrix (706) basierend auf der Vielzahl von Signaturwurzeln;
Durchführen (S1504) einer Demodulation eines einzelträgermodulierten Signals (120), das von der Sendervorrichtung (110) empfangen wird, basierend auf der ersten Vandermonde-Matrix (706), um ein demoduliertes Signal (121) zu erhalten; und
Erhalten (S1505) von Symbolen (130) basierend auf dem Durchführen einer ersten iterativen Prozedur auf dem demodulierten Signal (121), wobei die erste iterative Prozedur einen Satz von parallelen Interferenzunterdrückungs(PIC)-Iterationen umfasst,
wobei, für jede PIC-Iteration, geschätzte Symbole nach der PIC-Iteration erhalten werden und das Verfahren ferner umfasst:

Konstruieren einer zweiten Vandermonde-Matrix (704) basierend auf der Vielzahl von Signaturwurzeln;
Erhalten einer ersten Matrix (701) basierend auf der ersten Vandermonde-Matrix (706);
Erhalten einer zweiten Matrix (702) basierend auf der ersten und der zweiten Vandermonde-Matrix (706, 704), um eine erste Intersymbolinterferenz (ISI) in einer aktuellen PIC-Iteration zu schätzen;
Durchführen einer Entzerrung mit einem Abgriff durch Anwenden einer Diagonalmatrix (703), die basierend auf der ersten und der zweiten Vandermonde-Matrix (706, 704) erhalten wird, und einer geschätzten Kanalmatrix auf das demodulierte Signal (121) oder auf einen Rest des demodulierten Signals (121), der nach dem Entfernen eines Beitrags der geschätzten ersten ISI aus geschätzten Symbolen in einer vorherigen PIC-Iteration erhalten wird; und

Erhalten der Symbole (130) basierend auf dem Entfernen des Beitrags der geschätzten ersten ISI in der aktuellen PIC-Iteration aus den geschätzten Symbolen der vorherigen PIC-Iteration,

wobei die Symbole (130) ferner basierend auf dem Durchführen einer zweiten iterativen Prozedur auf den erhaltenen Symbolen, die aus der ersten iterativen Prozedur ausgegeben wurden, erhalten werden, wobei die zweite iterative Prozedur einen Satz von Interferenzunterdrückungsverfeinerungs(ICR)-Iterationen umfasst,

wobei das Verfahren ferner das Erhalten eines Unterdrückungsfilters (801) basierend auf der geschätzten Kanalmatrix oder den bestimmten CSI (101) des Kommunikationskanals (111) umfasst,

wobei, für jede ICR-Iteration, das Verfahren ferner umfasst:

Anwenden des Unterdrückungsfilters (801) auf die Ausgabe der ersten iterativen Prozedur oder eine Ausgabe einer vorherigen ICR-Iteration, um eine zweite ISI zu schätzen; und

Erhalten der Symbole (230) basierend auf dem Anwenden einer Inversion einer Diagonalmatrix (803) auf ein gefiltertes empfangenes Signal nach dem Entfernen eines Beitrags der geschätzten zweiten ISI, wobei das gefilterte empfangene Signal das empfangene einzelträgermodulierte Signal (120), das durch einen Filter $H^H$ gefiltert wurde, ist, wobei H die geschätzte Kanalmatrix ist,

wobei der Unterdrückungsfilter (801) durch $H^H H - \operatorname{diag}(H^H H)$ gegeben ist und die Diagonalmatrix (803) $\operatorname{diag}(H^H H)$ ist.

14. Verfahren (1600) für eine Empfängervorrichtung (200) für die Einzelträgermodulation, wobei das Verfahren (1600) umfasst:

Bestimmen (S1601) von Kanalzustandsinformationen (CSI) (201) eines Kommunikationskanals (111) zwischen der Empfängervorrichtung (200) und einer Sendervorrichtung (110);

Bestimmen (S1602) einer Vielzahl von Signaturwurzeln basierend auf den CSI (201), wobei jede Signaturwurzel der Vielzahl von Signaturwurzeln ein komplexer Punkt ungleich null ist und wobei die Vielzahl von Signaturwurzeln auf einem Umfang eines Kreises in einer komplexen Ebene gleichmäßig verteilt sind;

Konstruieren (S1603) einer ersten Vandermonde-Matrix (706) und einer zweiten Vandermonde-Matrix (704) basierend auf der Vielzahl von Signaturwurzeln;

Durchführen (S1604) einer Demodulation eines einzelträgermodulierten Signals (120), das von der Sendervorrichtung (110) empfangen wird, basierend auf der ersten Vandermonde-Matrix (706), um ein demoduliertes Signal (221) zu erhalten; und

Erhalten (S1605) von Symbolen (230) basierend auf dem Durchführen einer iterativen Prozedur auf geschätzten Symbolen, die durch eine Frequenzbereichsentzerrung erhalten werden, die eine Entzerrung mit einem Abgriff, gefolgt durch eine Nachentzerrung, die basierend auf der zweiten Vandermonde-Matrix (704) durchgeführt wird, umfasst, wobei die iterative Prozedur einen Satz von Interferenzunterdrückungsverfeinerungs(ICR)-Iterationen umfasst,

wobei das Verfahren ferner das Erhalten eines Unterdrückungsfilters (801) basierend auf den bestimmten CSI (201) des Kommunikationskanals (111) umfasst, wobei, für jede ICR-Iteration, das Verfahren ferner umfasst:

Anwenden des Unterdrückungsfilters (801) auf die geschätzten Symbole während der ersten Iteration oder auf eine Ausgabe einer vorherigen ICR-Iteration, um eine zweite ISI zu schätzen; und

Erhalten der Symbole (230) basierend auf dem Anwenden einer Inversion einer Diagonalmatrix (803) auf ein gefiltertes empfangenes Signal nach dem Entfernen eines Beitrags der geschätzten zweiten ISI, wobei das gefilterte empfangene Signal das empfangene einzelträgermodulierte Signal (120), das durch einen Filter $H^H$ gefiltert wurde, ist, wobei H die geschätzte Kanalmatrix ist,

wobei der Unterdrückungsfilter (801) durch $H^H H - \operatorname{diag}(H^H H)$ gegeben ist und die Diagonalmatrix (803) $\operatorname{diag}(H^H H)$ ist.

15. Computerprogramm, das Anweisungen umfasst, die, wenn das Programm durch einen Computer ausgeführt wird, den Computer veranlassen, das Verfahren (1500) nach Anspruch 13 oder das Verfahren (1600) nach Anspruch 14 vorzunehmen.

**Revendications**

1. Dispositif récepteur (100) destiné à une modulation à porteuse unique, le dispositif récepteur (100) étant configuré pour :

   déterminer des informations d'état de canal, CSI, (101) d'un canal de communication (111) entre le dispositif récepteur (100) et un dispositif émetteur (110) ;
   déterminer une pluralité de racines de signature sur la base des CSI (101), dans lequel chaque racine de signature de la pluralité de racines de signature est un point complexe non nul, et dans lequel la pluralité de racines de signature sont uniformément réparties sur une circonférence d'un cercle dans un plan complexe ;
   construire une première matrice de Vandermonde (706) sur la base de la pluralité de racines de signature ;
   réaliser une démodulation d'un signal modulé à porteuse unique (120) reçu du dispositif émetteur (110), sur la base de la première matrice de Vandermonde (706), afin d'obtenir un signal démodulé (121) ; et
   obtenir des symboles (130) sur la base de la réalisation d'une première procédure itérative sur le signal démodulé (121), la première procédure itérative comprenant un ensemble d'itérations d'annulation d'interférence parallèle, PIC,
   dans lequel, pour chaque itération PIC, des symboles estimés sont obtenus après l'itération PIC, et le dispositif récepteur (100) est configuré pour :

      construire une seconde matrice de Vandermonde (704) sur la base de la pluralité de racines de signature ;
      obtenir une première matrice (701) sur la base de la première matrice de Vandermonde (706) ;
      obtenir une seconde matrice (702) sur la base des première et seconde matrices de Vandermonde (706, 704) afin d'estimer une première interférence inter-symboles, ISI, dans une itération PIC en cours ;
      réaliser une égalisation à une prise en appliquant une matrice diagonale (703) obtenue sur la base des première et seconde matrices de Vandermonde (706, 704) et d'une matrice de canal estimée sur le signal démodulé (121) ou sur un reste du signal démodulé (121) obtenu après suppression d'une contribution de la première ISI estimée à partir de symboles estimés dans une itération PIC précédente ; et
      obtenir les symboles (130) sur la base de la suppression de la contribution de la première ISI estimée dans l'itération PIC en cours à partir des symboles estimés de l'itération PIC précédente,
      dans lequel les symboles (130) sont en outre obtenus sur la base de la réalisation d'une seconde procédure itérative sur les symboles en sortie de la première procédure itérative, la seconde procédure itérative comprenant un ensemble d'itérations d'affinement d'annulation d'interférence, ICR,
      dans lequel le dispositif récepteur (100) est en outre configuré pour obtenir un filtre d'annulation (801) sur la base de la matrice de canal estimée ou des CSI (101) déterminées du canal de communication (111),
      dans lequel, pour chaque itération ICR, le dispositif récepteur (100) est en outre configuré pour :

         appliquer le filtre d'annulation (801) à la sortie de la première procédure itérative ou à une sortie d'une itération ICR précédente afin d'estimer une seconde ISI ; et
         obtenir les symboles (230) sur la base de l'application d'une inversion d'une matrice diagonale (803) sur un signal reçu filtré après avoir supprimé une contribution de la seconde ISI estimée, dans lequel le signal reçu filtré est le signal modulé à porteuse unique reçu (120) filtré par un filtre $H^H$, dans lequel H est la matrice de canal estimée, dans lequel le filtre d'annulation (801) est donné par $H^H H - \mathrm{diag}(H^H H)$, et la matrice diagonale (803) est $\mathrm{diag}(H^H H)$.

2. Dispositif récepteur (100) selon la revendication 1, dans lequel le dispositif récepteur (100) est configuré pour, au cours de chaque itération PIC, appliquer la première matrice (701) et la seconde matrice (702) respectivement sur les symboles estimés de l'itération PIC précédente, dans lequel la première matrice (701) est appliquée pour réaliser une transformée dans le domaine fréquentiel des symboles estimés de l'itération PIC précédente, et dans lequel la seconde matrice (702) est appliquée pour estimer la première ISI de symboles transformés dans le domaine fréquentiel.

3. Dispositif récepteur (100) selon la revendication 1 ou 2, dans lequel la première procédure itérative est réalisée jusqu'à ce qu'une convergence de l'ensemble d'itérations PIC réponde à un critère prédéfini.

4. Dispositif récepteur (100) selon l'une quelconque des revendications 1 à 3, dans lequel, au cours de chaque itération ICR ultérieure, le filtre d'annulation (801) est appliqué aux symboles obtenus (130) en sortie d'une itération ICR précédente pour estimer la seconde ISI.

**5.** Dispositif récepteur (100) selon l'une quelconque des revendications 1 à 4, dans lequel la seconde procédure itérative est réalisée jusqu'à ce qu'une convergence de l'ensemble d'itérations ICR réponde à un critère prédéfini.

**6.** Dispositif récepteur (200) destiné à une modulation à porteuse unique, le dispositif récepteur (200) étant configuré pour :

déterminer des informations d'état de canal, CSI, (201) d'un canal de communication (111) entre le dispositif récepteur (200) et un dispositif émetteur (110) ;

déterminer une pluralité de racines de signature sur la base des CSI (201), dans lequel chaque racine de signature de la pluralité de racines de signature est un point complexe non nul, et dans lequel la pluralité de racines de signature sont uniformément réparties sur une circonférence d'un cercle dans un plan complexe ;

construire une première matrice de Vandermonde (706) et une seconde matrice de Vandermonde (704) sur la base de la pluralité de racines de signature ;

réaliser une démodulation d'un signal modulé à porteuse unique (120) reçu du dispositif émetteur (110), sur la base de la première matrice de Vandermonde (706), afin d'obtenir un signal démodulé (221) ; et

obtenir des symboles (230) sur la base de la réalisation d'une procédure itérative sur des symboles estimés obtenus par une égalisation dans le domaine fréquentiel comprenant une égalisation à une prise en faisant suivre par une post-égalisation réalisée sur la base de la seconde matrice de Vandermonde (704), la procédure itérative comprenant un ensemble d'itérations d'affinement d'annulation d'interférence, ICR,

dans lequel le dispositif récepteur (200) est en outre configuré pour obtenir un filtre d'annulation (801) sur la base des CSI (201) déterminées du canal de communication (111),

dans lequel, pour chaque itération ICR, le dispositif récepteur (200) est en outre configuré pour :

appliquer le filtre d'annulation (801) sur les symboles estimés au cours de la première itération ou sur une sortie d'une itération ICR précédente afin d'estimer une seconde ISI ; et

obtenir les symboles (230) sur la base de l'application d'une inversion d'une matrice diagonale (803) sur un signal reçu filtré après avoir supprimé une contribution de la seconde ISI estimée, dans lequel le signal reçu filtré est le signal modulé à porteuse unique reçu (120) filtré par un filtre $H^H$, dans lequel H est la matrice de canal estimée, dans lequel le filtre d'annulation (801) est donné par $H^H H$ - diag($H^H H$), et la matrice diagonale (803) est diag($H^H H$).

**7.** Dispositif récepteur (200) selon la revendication 6, dans lequel, au cours de chaque itération ICR ultérieure, le filtre d'annulation (801) est appliqué aux symboles obtenus d'une itération ICR précédente pour estimer le seconde ISI.

**8.** Dispositif récepteur (200) selon la revendication 6 ou 7, dans lequel la procédure itérative est réalisée jusqu'à ce qu'une convergence de l'ensemble d'itérations ICR réponde à un critère prédéfini.

**9.** Dispositif récepteur (100, 200) selon l'une quelconque des revendications 1 à 8, configuré en outre pour calculer une métrique pour au moins l'une de la détermination d'un rayon du cercle dans le plan complexe et de l'évaluation de la pluralité de racines de signature, sur la base des CSI (201) du canal de communication (111).

**10.** Dispositif récepteur (100, 200) selon l'une quelconque des revendications 1 à 9, configuré en outre pour modifier individuellement une racine de signature de la pluralité de racines de signature sur la base d'un algorithme d'apprentissage automatique, en particulier un algorithme de descente de gradient.

**11.** Dispositif récepteur (100, 200) selon la revendication 10, configuré en outre pour réaliser la démodulation du signal modulé à porteuse unique (120) sur la base de la racine de signature modifiée individuellement.

**12.** Système (300) destiné à une modulation à porteuse unique, le système (300) comprenant :

un dispositif émetteur (110) configuré pour générer un signal modulé à porteuse unique sur la base de la construction d'une matrice de Lagrange ou d'une matrice de Vandermonde ; et

un dispositif récepteur (100, 200) selon l'une quelconque des revendications 1 à 11.

**13.** Procédé (1500) pour un dispositif récepteur (100) destiné à une modulation à porteuse unique, dans lequel le procédé comprend :

la détermination (S1501) d'informations d'état de canal, CSI, (101) d'un canal de communication (111) entre le dispositif récepteur (100) et un dispositif émetteur (110) ;

la détermination (S1502) d'une pluralité de racines de signature sur la base des CSI (101), dans lequel chaque racine de signature de la pluralité de racines de signature est un point complexe non nul, et dans lequel la pluralité de racines de signature sont uniformément réparties sur une circonférence d'un cercle dans un plan complexe ;

la construction (S1503) d'une première matrice de Vandermonde (706) sur la base de la pluralité de racines de signature ;

la réalisation (S1504) d'une démodulation d'un signal modulé à porteuse unique (120) reçu du dispositif émetteur (110), sur la base de la première matrice de Vandermonde (706), afin d'obtenir un signal démodulé (121) ; et

l'obtention (S1505) de symboles (130) sur la base de la réalisation d'une première procédure itérative sur le signal démodulé (121), la première procédure itérative comprenant un ensemble d'itérations d'annulation d'interférence parallèle, PIC,

dans lequel, pour chaque itération PIC, des symboles estimés sont obtenus après l'itération PIC, et le procédé comprend en outre :

la construction d'une seconde matrice de Vandermonde (704) sur la base de la pluralité de racines de signature ;

l'obtention d'une première matrice (701) sur la base de la première matrice de Vandermonde (706) ;

l'obtention d'une seconde matrice (702) sur la base des première et seconde matrices de Vandermonde (706, 704) afin d'estimer une première interférence intersymboles, ISI, dans une itération PIC en cours ;

la réalisation d'une égalisation à une prise en appliquant une matrice diagonale (703) obtenue sur la base des première et seconde matrices de Vandermonde (706, 704) et

d'une matrice de canal estimée sur le signal démodulé (121) ou sur un reste du signal démodulé (121) obtenu après suppression d'une contribution de la première ISI estimée à partir de symboles estimés dans une itération PIC précédente ; et

l'obtention des symboles (130) sur la base de la suppression de la contribution de la première ISI estimée dans l'itération PIC en cours à partir des symboles estimés de l'itération PIC précédente,

dans lequel les symboles (130) sont en outre obtenus sur la base de la réalisation d'une seconde procédure itérative sur les symboles obtenus en sortie de la première procédure itérative, la seconde procédure itérative comprenant un ensemble d'itérations d'affinement d'annulation d'interférence, ICR,

dans lequel le procédé comprend en outre l'obtention d'un filtre d'annulation (801) sur la base de la matrice de canal estimée ou des CSI (101) déterminées du canal de communication (111),

dans lequel, pour chaque itération ICR, le procédé comprend en outre :

l'application du filtre d'annulation (801) à la sortie de la première procédure itérative ou à une sortie d'une itération ICR précédente afin d'estimer une seconde ISI ; et

l'obtention des symboles (230) sur la base de l'application d'une inversion d'une matrice diagonale (803) sur un signal reçu filtré après avoir supprimé une contribution de la seconde ISI estimée, dans lequel le signal reçu filtré est le signal modulé à porteuse unique reçu (120) filtré par un filtre $H^H$, dans lequel H est la matrice de canal estimée,

dans lequel le filtre d'annulation (801) est donné par $H^H H - diag(H^H H)$, et la matrice diagonale (803) est $diag(H^H H)$.

14. Procédé (1600) pour un dispositif récepteur (200) destiné à une modulation à porteuse unique, dans lequel le procédé (1600) comprend :

la détermination (S1601) d'informations d'état de canal, CSI, (201) d'un canal de communication (111) entre le dispositif récepteur (200) et un dispositif émetteur (110) ;

la détermination (S1602) d'une pluralité de racines de signature sur la base des CSI (201), dans lequel chaque racine de signature de la pluralité de racines de signature est un point complexe non nul, et dans lequel la pluralité de racines de signature sont uniformément réparties sur une circonférence d'un cercle dans un plan complexe ;

la construction (S1603) d'une première matrice de Vandermonde (706) et d'une seconde matrice de Vandermonde (704) sur la base de la pluralité de racines de signature ;

la réalisation (S1604) d'une démodulation d'un signal modulé à porteuse unique (120) reçu du dispositif émetteur (110), sur la base de la première matrice de Vandermonde (706), afin d'obtenir un signal démodulé (221) ; et

l'obtention (S1605) de symboles (230) sur la base de la réalisation d'une procédure itérative sur des symboles estimés obtenus par une égalisation dans le domaine fréquentiel comprenant une égalisation à une prise en faisant suivre par une post-égalisation réalisée sur la base de la seconde matrice de Vandermonde (704), la procédure itérative comprenant un ensemble d'itérations d'affinement d'annulation d'interférence, ICR,

dans lequel le procédé comprend en outre l'obtention d'un filtre d'annulation (801) sur la base des CSI (201) déterminées du canal de communication (111),

dans lequel, pour chaque itération ICR, le procédé comprend en outre :

l'application du filtre d'annulation (801) sur les symboles estimés au cours de la première itération ou sur une sortie d'une itération ICR précédente afin d'estimer une seconde ISI ; et

l'obtention des symboles (230) sur la base de l'application d'une inversion d'une matrice diagonale (803) sur un signal reçu filtré après avoir supprimé une contribution de la seconde ISI estimée, dans lequel le signal reçu filtré est le signal modulé à porteuse unique reçu (120) filtré par un filtre $H^H$, dans lequel H est la matrice de canal estimée,

dans lequel le filtre d'annulation (801) est donné par $H^H H - \text{diag}(H^H H)$, et la matrice diagonale (803) est $\text{diag}(H^H H)$.

**15.** Programme informatique comprenant des instructions qui, lorsque le programme est exécuté par un ordinateur, amènent l'ordinateur à mettre en œuvre le procédé (1500) selon la revendication 13 ou le procédé (1600) selon la revendication 14.

**FIG. 1**

**FIG. 2**

**FIG. 3**

EP 4 154 486 B1

**FIG. 4**

EP 4 154 486 B1

FIG. 5

FIG. 6

EP 4 154 486 B1

**FIG. 7**

FIG. 8

FIG. 9

**FIG. 10**

FIG. 11

**FIG. 12**

**FIG. 13**

FIG. 14B

FIG. 14A

44

$$1500$$

S1501 — Determining channel state information (CSI) of a communication channel between a receiver device and a transmitter device

S1502 — Determining a plurality of signature roots based on the CSI, wherein each signature root of the plurality of signature roots is a nonzero complex point, and wherein the plurality of signature roots are uniformly distributed on a circumference of a circle in a complex plane

S1503 — Constructing a first Vandermonde matrix based on the plurality of signature roots

S1504 — Performing a demodulation of a single-carrier modulated signal received from the transmitter device, based on the first Vandermonde matrix, to obtain a demodulated signal

S1505 — Obtaining symbols based on performing a first iterative procedure on the demodulated signal, the first iterative procedure comprising a set of parallel interference cancellation iterations

**FIG. 15**

EP 4 154 486 B1

S1601 Determining channel state information (CSI) of a communication channel between a receiver device and a transmitter device

S1602 Determining a plurality of signature roots based on the CSI, wherein each signature root of the plurality of signature roots is a nonzero complex point, and wherein the plurality of signature roots are uniformly distributed on a circumference of a circle in a complex plane

S1603 Constructing a first Vandermonde matrix and a second Vandermonde matrix based on the plurality of signature roots

S1604 Performing a demodulation of a single-carrier modulated signal received from the transmitter device, based on the first Vandermonde matrix, to obtain a demodulated signal

S1605 Obtaining symbols based on performing an iterative procedure on estimated symbols obtained by a frequency-domain equalization comprising a one-tap equalization followed by a post-equalization performed based on the second Vandermonde matrix, the iterative procedure comprising a set of interference cancellation refinement iterations

**FIG. 16**

**FIG. 17**

EP 4 154 486 B1

**FIG. 18**

**REFERENCES CITED IN THE DESCRIPTION**

**Non-patent literature cited in the description**

- LVDM Time-Frequency Equalizers for Doubly Selective Channels. **TOURKI KAMEL et al.** 2020 IEEE 31ST ANNUAL INTERNATIONAL SYMPOSIUM ON PERSONAL, INDOOR AND MOBILE RADIO COMMUNICATIONS. IEEE, 31 August 2020, 1-6

- Single Carrier Lagrange Vandermonde Division Multiplexing. **TOURKI KAMEL et al.** 2020 IEEE 31ST ANNUAL INTERNATIONAL SYMPOSIUM ON PERSONAL, INDOOR AND MOBILE RADIO COMMUNICATIONS. IEEE, 31 August 2020, 1-5
- Lagrange Vandermonde Division Multiplexing. **TOURKI KAMEL et al.** ICC 2020 - 2020 IEEE INTERNATIONAL CONFERENCE ON COMMUNICATIONS (ICC). IEEE, 07 June 2020, 1-6